(19) **Europäisches Patentamt**

**European Patent Office**

**Office européen des brevets**

(11) Veröffentlichungsnummer: **0 247 223**
**A1**

(12) **EUROPÄISCHE PATENTANMELDUNG**

(21) Anmeldenummer: **86107259.3**

(22) Anmeldetag: **28.05.86**

(51) Int. Cl.⁴: **F01C 9/00** , **F01C 21/10** , **F02B 55/08**

(43) Veröffentlichungstag der Anmeldung:
**02.12.87 Patentblatt 87/49**

(84) Benannte Vertragsstaaten:
**CH DE FR GB IT LI NL SE**

(71) Anmelder: **Köpke, Günter, Dr.-Ing.**
**Plankensteinstrasse 2**
**D-8183 Rottach-Egern(DE)**

(72) Erfinder: **Die Erfinder haben auf ihre Nennung verzichtet**

(74) Vertreter: **Reinhard, Skuhra, Weise**
**Leopoldstrasse 51**
**D-8000 München 40(DE)**

(54) **Verbrennungsringmotor.**

(57) Bei einem Verbrennungsringmotor 10, bestehend aus einem Motorgehäuse 12, wenigstens einem ringförmigen Arbeitsraum mit wenigsten einer Zündkerze, einer Kolbenwelle 40 mit wenigstens einem Arbeitskolben 62, der in dem ringförmigen Arbeitsraum pendelnd bewegbar ist, einer Luft-oder Verbrennungsgemisch-Zuführeinrichtung und aus einem Triebwerk, durch das die pendelnde Bewegung der Kolbenwelle 40 in eine gleichsinnige Drehbewegung einer Abtriebswelle umsetzbar ist, ist zur Erzielung einer kleinstmöglichen Baugröße und einer optimalen Motorfunktion vorgesehen, daß das Motorengehäuse 12 im Bereich eines den Arbeitsraum begrenzenden Wandabschnitts 26, 28 geteilt ist, daß ein wenigstens teilweise an einem Motorgehäuseteil 14, 16 angeformtes Triebwerksgehäuse vorhanden ist, und daß der Luft-oder Verbrennungsgemisch-Zuführeinrichtung Spülnanalteile 66 zugeordnet sind, welche von der Kolbenwelle 40 und Abschnitten des Motorgehäuses gebildet und abhängig von der Stellung der Kolbenwelle schließbar sind. Vorzugsweise grenzt jeder ringförmige Arbeitsraum mit wenigstens einem Wandabschnitt 26, 28 an einen zugehörigen Luft-oder Verbrennungsgemisch-Einspülabschnitt, wobei das Motorgehäuse 12 im Bereich dieses Wandabschnitts geteilt ist.

Fig 1

## Verbrennungsringmotor

Die Erfindung betrifft einen Verbrennungsringmotor, bestehend aus einem Motorgehäuse, wenigstens einem ringförmigen Arbeitsraum mit wenigstens einer Zündkerze, einer Kolbenwelle mit wenigstens einem Arbeitskolben, der in dem ringförmigen Arbeitsraum pendelnd bewegbar ist, einer Luft-oder Verbrennungsgemisch-Zuführeinrichtung und aus einem Triebwerk, durch das die pendelnde Bewegung der Kolbenwelle in eine gleichsinnige Drehbewegung einer Abtriebswelle übertragbar ist.

Verbrennungsmotoren lassen sich in Hubkolbenmotoren und Kreiskolbenmotoren unterteilen. Bei den heute üblichen Zweitakt-und Viertakthubkolbenmotoren ist eine der jeweiligen Zahl der Takte .entsprechende Zylinderzahl mit jeweils einem Arbeitsraum erforderlich, um bei jedem Takt Arbeit von einem der Zylinder abzugeben. Die geradlinige hin-und hergehende Bewegung jedes Kolbens wird jeweils über eine zugeordnete Pleuelstange in eine rotierende Bewegung einer Kurbelwelle übertragen. Die zahlreichen sich bewegenden und Verschleiß unterliegenden Teile konventioneller Hubkolbenmotoren führen dazu, daß der Hubkolbenmotor in Relation zur Leistung nur sehr großvolumig und relativ schwer ausgelegt werden kann. Er ist infolge seiner zahlreichen Einzelteile sehr lohn-und materialintensiv und entsprechend kostspielig.

Der eingangs genannte Verbrennungsringmotor, der auch als Schwenkkolben-oder Pendelkolbenmotor bezeichnet wird, ist ein oszillierender Hubkolbenmotor mit ringförmigem Zylinder, bei dem sich der bzw. die Arbeitskolben in einem ringförmigen Arbeitsraum pendelnd bzw. oszillierend hin-und herbewegen und diese Ausgangsbewegung mit Hilfe eines Triebwerks in eine gleichsinnige Drehbewegung einer Abtriebswelle umgesetzt bzw. übertragen wird.

Ein Verbrennungsringmotor mit den eingangs genannten Merkmalen ist bereits aus der DE-OS 33 03 509 bekannt. Diese Druckschrift offenbart Motoren, deren Arbeitsweise mit der eines Zweitakt-und eines Viertakthubkolbenmotors vergleichbar ist. Als nachteilig ist insbesondere bei den Viertaktmotoren anzusehen, daß deren Herstellung nur mit einem unvertretbar hohen Fertigungsaufwand und mit einer erheblichen Baugröße möglich ist. Der Betrieb der dargestellten Motoren ist zudem nur beschränkt oder überhaupt nicht möglich, da keine befriedigenden Maßnahmen zur Kühlung und Schmierung der Kolben vorgesehen sind. Die Verwendung von Kühl-und Schmiersystemen, die bei herkömmlichen Hubkolbenmotoren bekannt sind, ist nur mit großem Aufwand und nur bedingt und mit einem unbefriedigenden Ergebnis auf Kosten der Baugröße möglich. Das gleiche gilt für die Produktion mit der unerläßlich hohen Präzision. Diese Motoren bieten keine Vorteile gegenüber den bestehenden Zwei-und Viertaktmotoren, so daß sie für die Industrie auch wegen der hohen Entwicklungs-und Investitionskosten uninteressant sind.

Der Erfindung liegt die Aufgabe zugrunde, einen einfach herstellbaren dauerbelastbaren Verbrennungsringmotor mit einer hochwirksamen Luft-bzw. Kraftstoffeinspülung zu schaffen.

Erfindungsgemäß wird diese Aufgabe durch den Anspruch 1 gelöst. Bevorzugte Merkmale, die die Erfindung vorteilhaft weiterbilden, sind in den nachgeordneten Ansprüchen enthalten.

Durch die erfindungsgemäße Ausgestaltung des Verbrennungsringmotors wird in vorteilhafter Weise die Fertigung wesentlich vereinfacht, da die vorgesehene Teilung eine problemlose und toleranzarme Bearbeitung der Gehäuseteile mit konventionellen Werkzeugmaschinen ermöglicht. Gleichzeitig hat die vorgesehene Teilung des Motorgehäuses den Vorteil, daß aus Gründen der Betriebssicherheit und des Verschleißes die Trennfuge zwischen den Gehäuseteilen in einen Bereich verlegt werden kann, der während der Bewegung des Arbeitskolbens nicht von diesem überschritten wird. Zugleich ermöglicht die vorgesehene Gehäuseteilung in vorteilhafter Weise eine besondere geringe Baugröße des Verbrennungsringmotors, ohne daß dessen Funktion beeinträchtigt wird.

Zur Verringerung der Baugröße des Verbrennungsringmotors trägt weiterhin vorteilhaft bei, daß ein wenigstens teilweise an einem Motorgehäuseteil angeformtes Triebwerksgehäuse vorgesehen ist. Den Forderungen nach kleinstmöglicher Bauweise und optimaler Funktion im Hinblick auf die Leistung und das Drehmoment trägt in günstiger Weise auch der Umstand bei, daß der Luft-oder Verbrennungsgemisch-Zuführeinrichtung Spülkanalteile zugeordnet sind, welche von der Kolbenwelle und Abschnitten der Motorengehäuses gebildet und abhängig von der Stellung der Kolbenwelle schließbar sind.

Von Vorteil ist bei dem erfindungsgemäßen Verbrennungsringmotor überdies, daß er bereits aufgrund der geringen Teilezahl sehr robust und leicht reparierbar ist, wenig Verschleiß und innere Reibung bietet und einen optimalen Betrieb gewährleistet, der bei geringem Treibstoffverbrauch und geringer Schadstoff emission einen universellen Anwendungsbereich von 1 bis 10.000 kw als Ottomotor mit Vergaser oder Benzineinspritzung sowie Diesel-und Gasbetrieb für Fahrzeuge und/oder stationäre Anlagen erschließt. Die Erfindung eröffnet in vorteilhafter Weise die Voraussetzung, im Vergleich zu konventionellen Hubkolbenmotoren bei gleicher Leistung nur mit einem Drittel des Gewichts, der Baugröße und der Herstellungskosten auszukommen, wobei insbesondere bis zu 40 % geringerer Brennstoffverbrauch eintritt. Der erfindungsgemäße Motor ist somit bei kleinstmöglicher Baugröße und Gewicht einfach und präzise herstellbar und dadurch viel kostengünstiger als bisher bekannte Motoren, wobei er ferner optimal mit geringerem Brennstoffverbrauch arbeitet und weniger Schadstoffemission im Vergleich zu konventionellen Hubkolbenmotoren aufweist.

Bei einer bevorzugten Ausführungsform weist das Motorgehäuse für jeden Arbeitsraum einen ringförmigen Luft-oder Verbrennungsgemisch-Einspülabschnitt auf, der mit Luft-oder einem Verbrennungsgemisch beaufschlagt wird und mit einem an der Kolbenwelle gebildeten Spülkanalteil in Verbindung steht. Der jeweilige motorengehäuseseitige Spülkanalteil mündet in günstiger Weise an einem stirnseitigen Ende des ringförmigen Verbrennungsgemisch-Einspülabschnitts, wodurch sich in dem Verbrennungsraum eine für den Verbrauch und den Wirkungsgrad optimale Schichtladung erzielen läßt.

Vorzugsweise grenzt jeder ringförmige Arbeitsraum mit wenigstens einem Wandabschnitt an einen zugehörigen ringförmigen Luft-oder Verbrennungsgemisch-Einspülabschnitt, wobei das Motorgehäuse im Bereich dieses Wandabschnitts geteilt ist. Hierdurch wird in vorteilhafter Weise erreicht, daß der Arbeitskolben bei seiner pendelnden Bewegung nicht über eine Trennfuge läuft und die Baugröße des Motors verringert werden kann.

Der Wandabschnitt zwischen Arbeitsraum und Verbrennungsgemisch-Einspülraum ist zur Erleichterung der Fertigung als separater Gehäuseteil ausgebildet, der im Bereich der Teilung des Motorgehäuses einsetzbar und befestigbar ist. Hinsichtlich der Fertigungserleichterung und der kompakten Ausbildung des Verbrennungsringmotors ist es weiterhin günstig, wenn der ringförmige Verbrennungsgemisch-Einspülraum in dem Motorengehäuse in querschnittsgleicher Fortsetzung des ringförmigen Arbeitsraumes gebildet ist. In einer bevorzugten Ausbildungsform des Verbrennungsringmotors weist die Kolbenwelle auch einen Spülkolben auf, der in dem ringförmigen Verbrennungsgemisch-Einspülraum angeordnet ist und sich diametral zu dem Arbeitskolben erstreckt. Diese Ausbildung hat unter anderem einen günstigen Einfluß auf den Ausgleich der Massenkräfte sowie die gleichmäßige Arbeit des Motors. Alternativ ist jedoch nach einer Ausbildungsform der Erfindung nur ein Arbeitskolben vorgesehen, wobei der dem Arbeitsraum stirnseitig begrenzende Wandabschnitt nicht als separat eingesetzbarer Gehäuseteil ausgebildet ist, sondern mit dem gehäuseseitigen Spülkanalteil in dem anderen Teil des Motorgehäuses gebildet ist. Diese Ausbildungsform ermöglicht eine besonders kleine und kompakte Baugröße des Verbrennungsringmotors.

Das Motorengehäuse ist vorzugsweise in der Ebene der Kolbenwelle wie ein Turbinengehäuse geteilt. Diese Gehäuseteilung bietet erhebliche fertigungstechnische Vorteile, da die Bearbeitung der jeweiligen Gehäusehälften und der zugeordneten Triebwerksgehäuse in einer Einspannung möglich ist. Diese Gehäuseteilung ist sowohl für Kolben mit winkligem als auch mit gerundetem Querschnitt vorteilhaft.

Alternativ ist es für Kolben mit winkligem Querschnitt günstig, wenn das Motorengehäuse aus einem topfartigen Gehäuseteil und einem deckelartigen Gehäuseteil besteht, wobei der Deckelartige Gehäuseteil einen axialen Wandabschnitt des Arbeitsraumes bildet. Auch diese Art der Gehäuseteilung bietet fertigungstechnische Vorteile und stellt sicher, daß keiner der Kolben über eine Trennfuge läuft. Dieser Aufbau wird auch vorzugsweise für Motoren mit mehr als 2 Kolben je Kolbenwelle verwendet.

Jeder Kolben und die Kolbenwelle sind vorzugsweise einstückig ausgebildet. Alternativ ist es insbesondere für die Herstellung größerer Motoren günstig, wenn jeder Kolben und die Kolbenwelle aus getrennten Teilen zusammengesetzt sind.

Im Hinblick auf einen zuverlässigen Betrieb mit hohem Wirkungsgrad und zur Verringerung des Gewichts des Motors ist es weiterhin vorteilhaft, wenn jeder Kolben und die Kolbenwelle hohl ausgebildet sind, und wenn jeder Kolben und die Kolbenwelle mit einem gasförmigen Medium gekühlt werden. Hierdurch wird eine wirksame Kühlung erreicht, die eine Anpassung an die jeweiligen Bedürfnisse duch geeignete Temperatur und Medienwahl ermöglicht und aufgrund der gasförmigen Natur des Kühlmittels werden günstigerweise masseabhängige Einflüsse vermieden, die den Lauf des Motors beeinträchtigen könnten.

Bei einer bevorzugten Ausbildungsform der Erfindung wird das gasförmige Medium an einer Seite der hohlen Kolbenwelle durch ein Zuführrohr in jeden Arbeitskolben über dessen Breite gerichtet zugeführt und tritt an derselben Seite der Kolbenwelle wieder aus. Alternativ ist vorgesehen, daß das gasförmige Medium an einer Seite der hohlen Kolbenwelle zugeführt und an der anderen Seite der Kolbenwelle austritt, wobei das Medium durch ein Leitelement in den nächstliegenden Abschnitt jedes Arbeitskolbens umlenkbar ist, wobei bei Vorhandensein eines Spülkolbens ein Teil des gasförmigen Mediums durch das Leitelement in den nächstliegenden Abschnitt des Spülkolbens umlenkbar ist. Durch die genannten Maßnahmen wird eine gezielte und wirkungsvolle Kühlung der Kolbenwelle und der Kolben erzielt, wobei der höheren Temperaturbelastungen ausgesetzte Arbeitskolben in günstiger Weise mit einem wesentlich größeren Anteil des gasförmigen Mediums beaufschlagt wird. Die von dem gasförmigen Medium aufgenommene und abtransportierte Wärme kann zudem in vorteilhafter Weise zur Vorwärmung der Luft und/oder des Gemischs dienen, um den Wirkungsgrad des Verbrennungsmotors weiter zu erhöhen. Falls das gasförmige Medium aus Luft besteht, die für die Gemisch aufbereitung vorgesehen ist, läßt sich der Wirkungsgrad ohne einen zwischengeschalteten Wärmetauscher noch weiter erhöhen. Für den optimalen Betrieb des Motors ist es weiterhin von Vorteil, wenn für die Kolbenwelle eine Ölschmierung im Bereich des den ringförmigen Arbeitsraum stirnseitig begrenzenden Wandabschnitts mit einer Ölzufuhr hinter eine durch einen Kolbenringabschnitt gebildeten Dichtung vorgesehen ist. Jeder Kolben weist vorzugsweise wenigstens einen derartigen Kolbenringabschnitt und eine in der Nähe der Kolbenwelle angeordnete Kolbenringdichtung auf, der wenigstens eine näher zur Kolbenwelle liegende gehäuseseitige Dichtung zugeordnet ist, wobei für die Kolbenschmierung eine Ölzufuhr unterhalb, jedes Kolbenringabschnitts vorgesehen ist und wobei ein Teil des Kolbenringabschnitts die Kolbenringdichtung übergreift, damit diese nicht wandert und um den Gasdurchlaß zu verhindern. Für winklige Kolbenquerschnitte sind in kreisförmig eingefräste Nuten eingesetzte Eckendichtungen vorgesehen, die in vorteilhafter Weise einen Verschleiß ausgleichen und sich selbst einstellen.

In Hinblock auf die günstige Fertigung und die Erzielung einer geringen Baugröße ist es von Vorteil, wenn das Triebwerksgehäuse für die Aufnahme eines Kurbelgetriebes vorgesehen ist und mit dem Motorgehäuse eine gemeinsame Teilung in der Ebene der Kolbenwelle aufweist.

Wenn weiterhin der Verbrennungsringmotor Anschlußelemente für eine modulartige serielle Verbindung mit wenigstens einem Verbrennungsringmotor, einer Pumpe und/oder einem Kompressor mit jeweils gleichartigem Aufbau aufweist oder alternativ die Gehäuse derartiger Aggregate dem Motorgehäuse angeformt sind, ergeben sich nicht nur Vorteile hinsichtlich der Serienfertigung der erfindungsgemäßen Verbrennungsringmotoren, sondern es werden auch gleichzeitig vorteilhafte Erweiterungs-und/oder Anwendungsmöglichkeiten für diese Motoren eröffnet, die nach Art eines Baukastensystems in vorteilhafter Weise die Anpassung an die jeweiligen Leistungs-und Anwendungsbedürfnisse ermöglichen, wobei auch für die Gesamtheit die Vorteile einr einfachen Herstellbarkeit und einer äußerst kompakten Ausbildung gelten. Die Kombination des Verbrennungsringmotors mit einem gleichartig aufgebauten Kompressor eröffnet weiterhin vorteilhaft die Möglichkeit, den Wirkungsgrad des Verbrennungsringmotors mit einer Aufladung bei insgesamt minimaler Baugröße weiterhin zu verbessern.

Weitere Einzelheiten, Merkmale und Vorteile der Erfindung sind den übrigen Ansprüchen sowie dem anschließenden Beschreibungsteil zu entnehmen, in dem die Erfindung unter Bezugnahme auf die beigefügten Zeichnungen näher erläutert wird. Es zeigen :

Figur 1 eine schematische Explosionsansicht einer ersten Ausbildungsform der Erfindung ;

Figur 2 einen vertikalen Schnitt durch den zusammengesetzten Motor nach Figur 1 senkrecht zur Kolbenwellenachse im Bereich des Triebwerks ;

Figur 3 einen Vertikalschnitt entlang der Kolbenwellenachse durch ein gegenüber der Figur 1 abgewandeltes Ausführungsbeispiel eines erfindungsgemäßen Verbrennungsringmotors mit gerundeten Kolbenquerschnitten ;

Figur 4 eine schematische Explosionsansicht eines weiteren Ausführungsbeispiels eines erfindungsgemäßen Verbrennungsringmotors mit topfartigem Motorgehäuse und deckelartigem Gehäuseteil ;

Figur 5 einen vertikalen Schnitt durch den zusammengesetzten Motor nach Figur 4 senkrecht zur Kolbenwellenachse in Richtung des Triebwerks :

Figur 6 einen Vertikalschnitt längs der Kolbenwellenachse durch einen modifizierten Verbrennungsringmotor mit recheckigem Kolbenquerschnitt zur Darstellung einer Art der Kolbenwellen-und Kolbenkühlung ;

Figur 7 einen senkrecht zur Kolbenwelle verlaufenden Vertikalschnitt durch ein weiteres Ausführungsbeispiel eines Verbrennungsringmotors, bei dem nur ein Arbeitskolben vorgesehen ist und das Triebwerksgehäuse zur Vereinfachung weggelassen ist ;

Figur 8 einen Schnitt wie Figur 7, wobei sich der Arbeitskolben in der Kompressionsstellung befindet ;

Figur 9 einen Schnitt entlang der Schnittlinie 9-9 in Figur 7 ;

Figur 10 einen Schnitt entlang der Schnittlinie 10-10 in Figur 8 ;

Figur 11 einen Vertikalschnitt durch ein weiteres Ausführungbeispiel eines erfindungsgemäßen Verbrennungsringmotors mit drei Arbeitskolben, wobei der Schnitt senkrecht zur Kolbenwellenachse verläuft und das zugehörige Triebwerksgehäuse weggelassen ist ;

Figur 12 einen Vertikalschnitt durch ein weiteres Ausführungsbeispiel eines Verbrennungsringmotors mit vier Arbeitskolben, wobei der Schnitt senkrecht zur Kolbenwellenachse verläuft und das zugehörige Triebwerksgehäuse zur Vereinfachung weggelassen worden ist ;

Figur 13 einen Schnitt durch eine zusammengesetzte Einheit aus Kolbenwelle und Spül-und Arbeitskolben ;

Figur 14 einen Schnitt durch die Darstellung gemäß Figur 13 entlang der Kolbenwellenachse ;

Figur 15 einen Längsschnitt durch eine modifizierte Kolbenwelle mit einstückig ausgebildeten Kolben zur Darstellung der entsprechend geführten Durchlaufkühlung ;

Figur 16 einen Schnitt entlang der Schnittlinie 16-16 in Figur 15 ;

Figur 17 einen Teilschnitt durch eine Motorenhälfte zur Darstellung der Schmierung und Dichtung eines Kolbens ;

Figur 17A einen Teilschnitt durch eine Verbrennungsringmotorhälfte ähnlich Figur 17, jedoch für einen prismenförmigen Kolben ;

Figur 17B eine vergrößerte Einzelheit aus der Figur 17A im Bereich der Axialdichtung ;

Figur 17C eine Draufsicht zur Darstellung der Zuordnung von Axialdichtung und Kolbenringabschnitten in den Figuren 17A und 17B ;

Figur 18 einen Teilschnitt zur Darstellung der Kolbenwellendichtung und Schmierung im Bereich eines separat als Wandabschnitt an das Gehäuse einsetzbaren Gehäuseteils ;

Figur 19 eine schematische Draufsicht auf einen Kolben zur Darstellung der Eckendichtungen ;

Figur 19A einen Schnitt entlang der Schnittlinie 19A-19A durch Figur 19 ;

Figur 20 eine schematische Darstellung der Anordnung von zwei miteinander verbundenen erfindungsgemäßen Verbrennungsringmotoren mit einem gemeinsamen Triebwerk ;

Figur 21 ein Ausführungsbeispiel von zwei miteinander über ein Triebwerk verbundene Verbrennungsringmotoren ;

Figur 22 einen Längsschnitt durch eine - schematisch dargestellte Verbrennungsringmotor-Kompressor-Einheit ;

Figur 23 einen Schnitt entlang der Schnittlinie 23-23 durch Figur 22 ;

Figur 24 eine graphische Darstellung des Leitungsbezogenen Vergleichs der Baugrößen verschiedener erfindungsgemäßer Verbrennungsringmotoren;

Fig. 25 einen Schnitt senkrecht zur Kolbenwellenachse durch ein weiteres Ausführungsbeispiel eines Verbrennungsringmotors mit einem Ausgleichskanal im Bereich des Luft- oder Verbrennungsgemisch-Einlaßkanals;

Fig. 26 einen Schnitt senkrecht zur Kolbenwellenachse durch ein schematisch dargestelltes weiteres Ausführungsbeispiel eines Verbrennungsringmotors mit druckgesteuerten Ventilen in zwei Luft-oder Verbrennungsgemisch-Einlaßkanälen in den Einspülabschnitt;

Fig. 27 einen Schnitt senkrecht zur Kolbenwellenachse durch ein schematisch dargestelltes weiteres Ausführungsbeispiel eines Verbrennungsringmotors, bei dem sowohl die Einlaßkanäle als auch die Einspül-Überströmkanäle mit druckgesteuerten Ventilen versehen sind; und

Fig. 28 einen Schnitt entlang der Schnittlinie 9'-9' in Fig. 27.

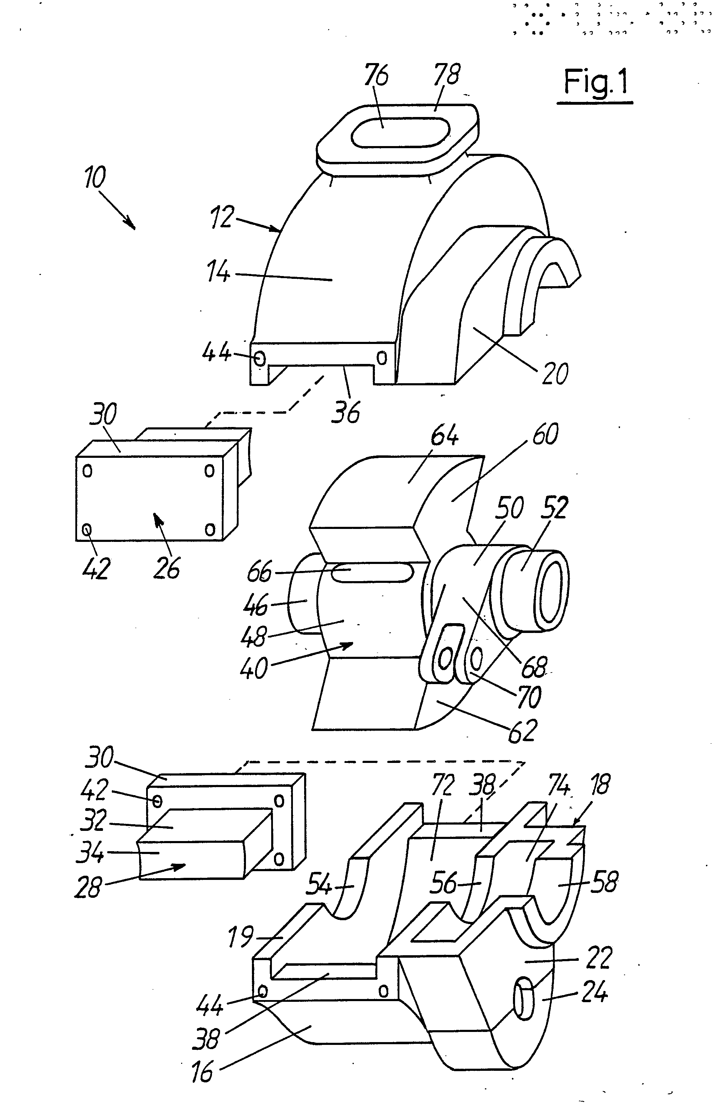

In Figur 1 ist eine schematische räumliche Ansicht einer auseinandergenommenen ersten Ausbildungsform eines Verbrennungsringmotors 10 dargestellt. Das Motorgehäuse 12 besteht aus einem Gehäuseoberteil 14 und einem Gehäuseunterteil 16. Das Motorgehäuse 12 ist im wesentlichen zylinderförmig ausgebildet und besteht vorzugsweise aus Aluminiumniederdruckguß, was im Gebensatz zu Aluminiumdruckguß eine größere Festigkeit bei hoher Fertigungspräzision aufweist.

An das Motorgehäuse 12 ist an einer Stirnseite das Triebwerksgehäuse 18 angeformt. Dabei ist an das Gehäuseoberteil 20 des Triebwerkgehäuses 18 und an das Gehäuseunterteil 16 des Motorgehäuses 12 ein Gehäuseunterteil 22 des Triebwerksgehäuses 18 jeweils einstückig angeformt. Das Triebwerksgehäuse 18 weist in Figur 1 unterhalb des Gehäuseunterteils 22 einen unteren Gehäuseabschluß 24 auf. Das Triebwerksgehäuse 18 besteht insgesamt ebenfalls vorzugsweise aus Aluminiumniederdruckguß.

Zu dem Motorgehäuse 12 gehören ferner zwei separate Gehäuseteile bzw. Wandabschnitte 26 und 28, die im Bereich der Teilung des Motorgehäuses einsetzbar sind, wie durch die gestrichelten Linien angedeutet. Die Wandabschnitte 26 und 28 besitzen einen gleichen Aufbau aus einer quaderförmigen Befestigungsplatte 30 und einer sich rechtwinklig zu dieser erstreckenden annähernd quaderförmigen Zylinderkopfplatte 32. Die Zylinderkopfplatte 32 ist an ihrer im eingesetzten Zustand nach innen weisenden Seite 34 in Längsrichtung des Motorgehäuses konkav ausgearbeitet, wobei der Krümmungsradius dem Radium einer in das Motorgehäuse 12 einzusetzenden Kolbenwelle 40 entspricht. Die Längserstreckung der Zylinderkopfplatte 32 ist kleiner als die der Befestigungsplatte 30. Jeder Wandabschnitt 26 und 28 ist mit seiner Zylinderkopfplatte 32 in eine im Bereich der Teilung des Motorgehäuses entsprechend in dem Gehäuseoberteil 14 und dem Gehäuseunterteil 16 vorgesehenen passenden Ausnehmungen 36 und 38 dichtend einsetzbar, wobei jeder Wandabschnitt mit seiner Befestigungsplatte 30 durch wenigstens vier im Randbereich vorgesehene Bohrungen 42 mit Hilfe von nicht dargestellten Bolzen, die in Gewindebohrungen 44 an dem Motorgehäuse 12 eingreifen, befestigt werden kann. Mit der Montage der Befestigungsplatte 30 werden in vorteilhafter Weise gleichzeitig das Gehäuseoberteil 14 und das Gehäuseunterteil 16 des Motorgehäuses passend miteinander verbunden.

Die in das Motorgehäuse 12 einzusetzende Kolbenwelle 40 besteht aus einem rohrförmigen Lagerabschnitt 46, einem Hauptabschnitt 48, einem Schwingenabschnitt 50 und einem rohrförmigen Lagerabschnitt 52. Die Kolbenwelle 40 ist in dem Motorgehäuse 12 in den Lagerbereichen 54, 56 und 58 in nicht dargestellten Weise mit Gleitlagern, Nadellagern oder dergleichen gelagert. Der Durchmesser der Lagerabschnitte 46 und 52 sowie des im Lagerbereich 56 gelagerten des Schwingabschnitts 50 liegt in seiner Größe etwa zwischen dem vergleichsweise größeren Durchmesser des Hauptabschnitts 48 und der Lagerabschnitte 46 und 52.

An dem Hauptabschnitt 48 der Kolbenwelle 40 befinden sich ein Saug-bzw. Spülkolben 60 und ein Arbeitskolben 62, die diaetra zueinander angeordnet sind und sich über die gesamte Breite des Hauptabschnitts 48 mit einem rechteckigen Querschnitt erstrecken. Beide Kolbe weisen eine konvexe radiale Fläche 64 auf, deren Krümmungsmittelpunkte in der Drehachse der Kolbenwelle 40 liegen. In dem Hauptabschnitt 48 der Kolbenwelle 40 ist weiterhin ein Spülkanal 66 in Form einer taschenförmigen Ausnehmung vorgesehen.

An den Schwingenabschnitt 50 ist eine sich im Winkel zu den Kolben 60 und 62 erstreckende Schwinge 68 angeformt, die sich von dem Grunddurchmesser des Schwingenabschnitts 50 zu einem abgerundeten Gabelabschnitt 70 verjüngt, der Bohrungen für einen in Figur 1 nicht dargestellten Lagerbolzen aufweist. Die gesamte Einheit aus Kolbenwelle 40, den Kolben 60 und 62 sowie der Schwinge 68 ist in das Motorgehäuse 12 und das angeformte Triebwerksgehäuse 18 einsetzbar, wobei die Kolben 60 und 62 in einen zylinderförmigen Abschnitt 72 des Motorgehäuses 12 und die Schwinge 68 in den Innenraum 74 des Triebwerksgehäuses 18 liegen.

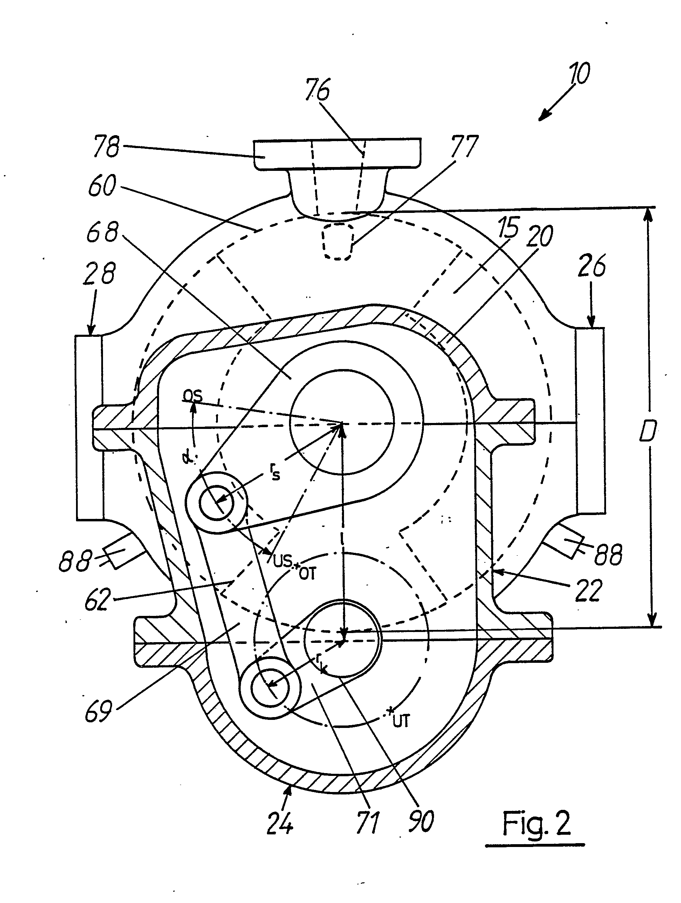

Auf dem Gehäuseoberteil 14 des Motorgehäuses 12 ist ein Luft-oder Verbrennungsgemischeinlaß 76 mit einem Montageflansch 78 angeordnet, wobei sich der Einlaß 76 in etwa senkrecht zur Drehachse der Kolbenwelle 40 und senkrecht zur Horizontalen Teilung des Motorgehäuses 12 erstreckt. Für den Auslaß von Verbrennungsgasen ist unterhalb des Gehäuseunterteils 16 des Motorgehäuses 12 ein nur in Fig. 2 dargestellter Auslaß 80 mit einem Montageflansch 82 vorgesehen, der sich diametral zu dem Einlaß 76 erstreckt.

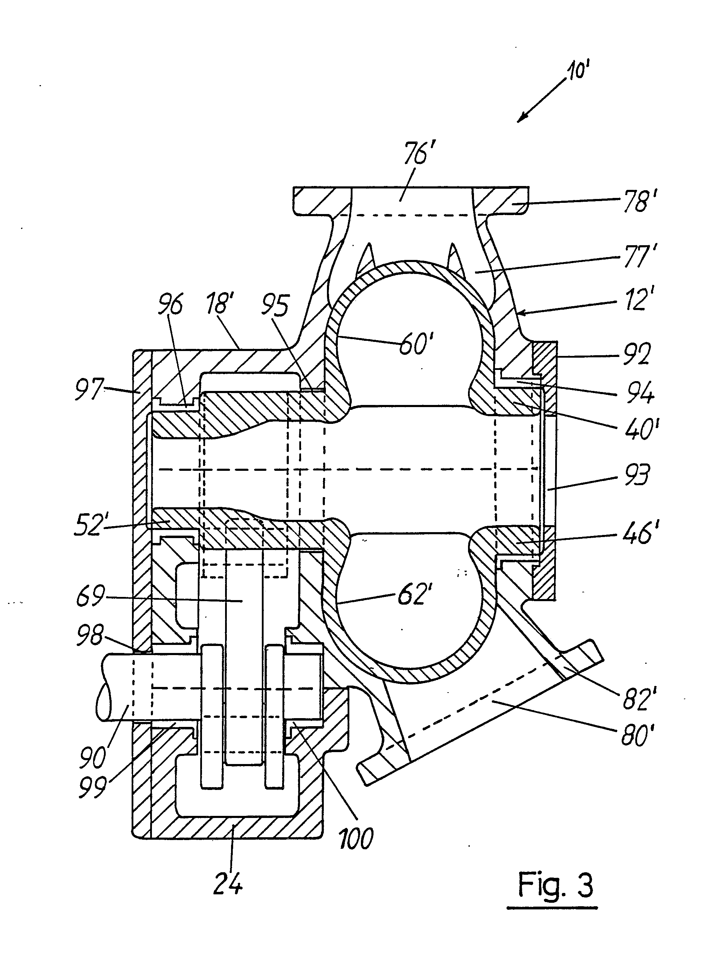

In der schematischen Darstellung von Fig. 1 und den zugeordneten Fig. 2 und 3 sind die erforderlichen Dichtungs-, Schmierungs-und Kühlungsmaßnahmen sowohl im Bereich der Kolbenwelle 40 und der Kolben 60 und 62 als auch im Motorgehäuse 12 zur Vereinfachung weggelassen. Dies gilt auch für die übrigen schematisch dargestellten Varianten der erfindungsgemäßen Verbrennungsringmotoren.

Fig. 2 zeigt einen Vertikalschnitt im Bereich des Triebwerks in Richtung des Verbrennungsringmotors gesehen. In Fig. 2 sind Einzelheiten des Aufbaues des Triebwerkgehäuses 18 mit dem Gehäuseoberteil 20, dem Gehäuseunterteil 22 und dem unteren Gehäuseabschluß 24 dargestellt, wobei die entsprechenden Triebwerkgehäuseteile über Flanschverbindungen aneinander dichtend befestigt sind. Von der Schwinge 68 wird die pendelnde Bewegung der Kolben 60 bzw. 62 über die angelenkte Pleuelstange 69 auf die an dieser angelenkten Abtriebskurbel 71 übertragen, wobei die Abtriebskurbel 71 vorzugsweise einstückig mit der Abtriebswelle 90 gebildet ist. Die Konzeption des Triebwerksgehäuses 18 ist hinsichtlich der Minimierung ihrer Baugröße optimiert und in für die Herstellung und Serienfertigung besonders geeigneten Weise an das Motorgehäuse 12 des Verbrennungsringmotors 10 angepaßt. Hierzu beträgt der Abstand 1 zwischen der Achse der Kolbenwelle 40 und der Achse der Abtriebskurbelwelle 90 bei einem Schwenkwinkel $\alpha$ von 75° etwa das 1,45-fache des Radius $r_S$ der Schwinge 68. Der Abstand I liegt im Bereich von 1,1 bis 1,7$\bullet r_S$ , wobei der Faktor von $r_S$ für $\alpha = 60°$ etwa 1,32 , für $\alpha = 90°$ etwa 1,58 und für $\alpha = 100°$ etwa 1,6 beträgt.

In Figur 2 sind weiterhin der Schwenkwinkel $\alpha$ für die Schwinge 68 eingezeichnet, wobei die Punkte OS bzw. US den oberen bzw. unteren Totpunkt der Schwingenbewegung kennzeichnen. Der Radius der Abtriebskurbel 71 ist mit $r_k$ bezeichnet, wobei der durch die Abtriebskurbel beschriebene Weg durch eine Strichpunktlinie angedeutet ist, auf der mit OT und UT die obere bzw. untere Strecklage der Abtriebskurbel 71 angedeutet ist. Ein solcher Verbrennungsringmotor entspricht in seiner auf die Taktfolge bezogenen Wirkungsweise einem Vierzylinder-Viertakt-Hubkolbenmotor, besitzt jedoch statt der vier Pleuel nur ein Pleuel. Dieses eine Pleuel kann im Gegensatz zu den Pleuel bei dem Hubkolbenmotor so minimiert werden, daß der Verbrennungsringmotor mit dem Triebwerk in kleiner Baugröße und minimalem Gewicht unter Berücksichtigung der o.g. Beziehung von I zu $r_S$ leistungsoptimiert werden kann. Der Schwenkwinkel α liegt zwischen 60 und 100°, insbesondere zwischen 70 und 80°, und der Abstand I liegt etwa im Bereich zwischen dem 0,2 bis 10-fachen des Gesamtkolbendurchmessers D. Der Kurbeldurchmesser, also 2 $r_k$ entspricht dem Abstand zwischen den Punkten OS und US.

In Fig. 2 ist weiterhin ein vorteilhaftes Detail im Bereich des Verbrennungsgemisch-Einlasses 76 dargestellt. Mit dem Verbrennungsgemisch-Einlaß 76 sind Seiteneinlässe 77 verbunden, die sich an beiden Seiten des in dem Gehäuseoberteil 14 gebildeten ringförmigen Luft-oder Verbrennungsgemisch-Einspülabschnitts 15 öffnen und der Verbesserung der Verbrennungsgemisch-Zufuhr dienen. Die Seiteneinlässe können, wie bei dem in Fig. 3 dargestellten Ausbildungsbeispiel eines erfindungsgemäßen Verbrenungsringmotors 10' in dem oberen Bereich des Luft-oder Verbrennungsgemisch-Einspülabschnitts 15 münden, oder sich zur schichtförmigen Einführung des Verbrennungsgemischs beidseitig des Kolbens etwa über die gesamte radiale Breite des Einspülabschnitts erstrecken. In Fig. 3 ist ein Vertikalschnitt entlang der Kolbenwellenachse eines anderen Ausführungsbeispiel eines Verbrennungsringmotors 10' dargestellt. Dabei sind Teile, die auch in den vorhergehenden Figuren vorhanden sind, mit denselben Bezugszahlen versehen.

Bei dieser Ausbildungsform eines erfindungsgemäßen Verbrennungsringmotors 10' sind ein Spülkolben 60' und ein Arbeitskolben 62' mit einem annähernd einen überwiegenden Teil eines Kreises bildenden Querschnitts dargestellt. Die weitere Ausbildung der Kolbenwelle und der Kolben ist etwa so wie in den Fig. 1 bis 3 beschrieben. Wiederum ist in dem Gehäuseobeteil 14' des Motorgehäuses 12' ein ringförmiger Luft-oder Verbrennungsgemisch-Einspülabschnitt und in dem Gehäuseunterteil 16' ein Arbeitsraum gebildet, wobei der Spülkolben 60' und der Arbeitskolben 62' sich jeweils in dem Einspülabschnitt bzw. dem Arbeitsraum pendelnd bewegen. Unterschiedlich ist auch die Orientierung des Auslaßkanals bzw. Auslasses 80', der schräg nach unten verläuft. Das Motorgehäuse 12' weist ferner einen kleinen Abschlußdeckel 92 auf, der in üblicher Weise abgedichtet an dem Motorgehäuse 12' befestigt ist. Der Abschlußdeckel 92 besitzt eine zentrische kreisförmige Öffnung 93, deren Durchmesser dem Innendurchmesser des Lagerabschnitts 46' der Kolbenwelle 40' entspricht und der zum Einführen eines gasförmigen Kühlmediums dient. Hinter dem Abschlußdeckel 92 sind Lager 94 für den Lagerabschnitt 46' schematisch angedeutet. Ein Lager 95, beispielsweise ein Nadellager, ist zwischen dem Hauptabschnitt 48' und dem Schwingabschnitt 50' in dem Gehäuse vorgesehen, während ein weiteres schematisch angedeutetes Lager 96 zur Lagerung des Lagerabschnitts 52' dient. Das Triebwerksgehäuse 18' ist durch einen großen Deckel 97 abgedichtet, der eine Austrittsöffnung 98 für den Durchtritt der Abtriebswelle 90 aufweist. Die Abtriebswelle 90 ist einstückig mit der Abtriebskurbel 71 in Form einer üblichen Kurbelwelle ausgebildet und in dem Triebwerksgehäuse 18' mit den - schematisch angedeuteten Lagern 99 und 100 gelagert. Die gesamte Kolbenwelle ist in sich masseausgeglichen, so daß keine Unwuchten an den Lagern auftreten. In dem Triebwerksgehäuse ist ein nicht dargestellter Ölsumpf für eine Tauchschmierung vorgesehen.

Auch bei dem in Figur 3 dargestellten Ausführungsbeispiel bietet die Teilung des Motorengehäuses im Bereich des den Arbeitsraum begrenzenden Wandabschnitts erhebliche fertigungstechnische Vorteile, die sich besonders für die Serienfertigung derartiger Motoren bemerkbar machen. Zugleich gewährleistet die erfindungsgemäße Ausbildung des Verbrennungsringmotors, daß dieser bei kleinstmöglicher Baugröße aufgrund der Auslegung der wenigen erforderlichen Bauteile optimal arbeitet.

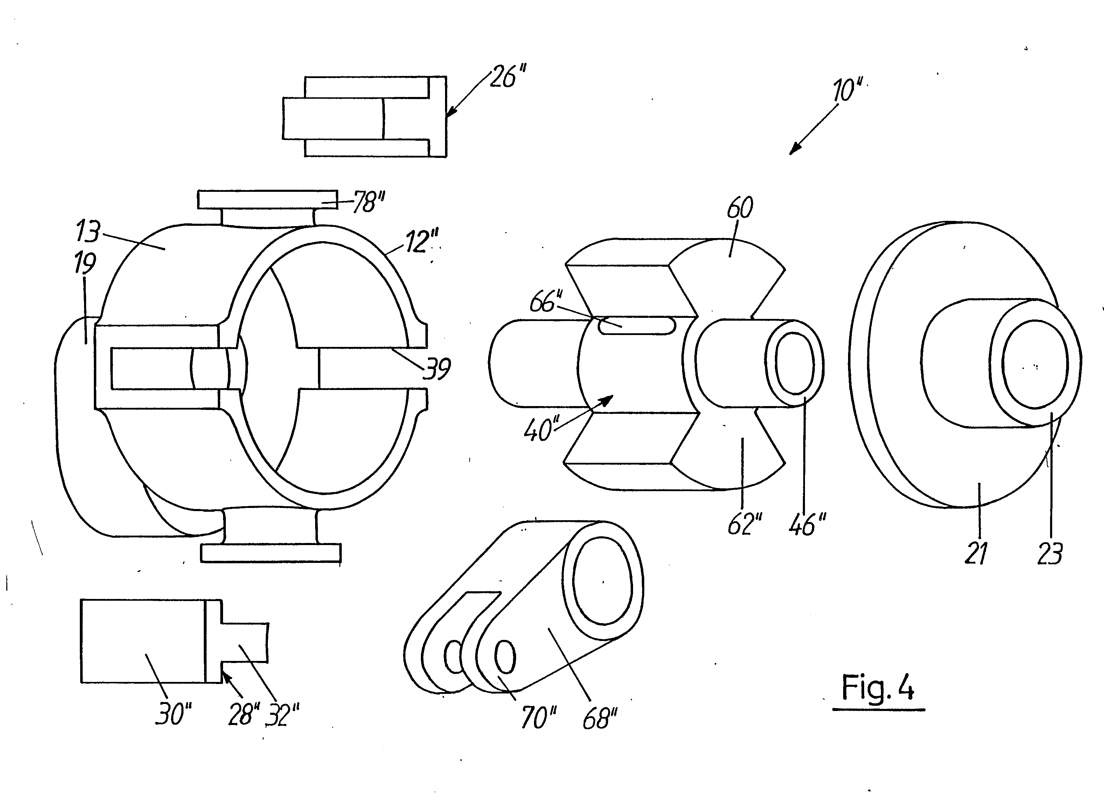

Figur 4 zeigt ein weiteres Ausführungsbeispiel eines Verbrennungsringmotors 10″, bei dem das Motorgehäuse 12″ in Abweichung von den oben dargestellten Verbrennungsring motoren aus einem topfartigen Gehäuseteil 13 besteht, an dem auch ein topfartig angeformtes Triebwerksgehäuse, das zur gegenüberliegenden Seite geöffnet ist, angeformt ist. Das topfartige Motorgehäuse 13 wird durch einen deckelartigen Gehäuseteil 21 geschlossen, an dem ein Lagerflansch 23 für den Lagerabschnitt 46 angeformt ist. Das topfartige Triebwerksgehäuse 19 wird ebenfalls durch einen nicht dargestellten und in seinen Außenkonturen der Form des Triebwerksgehäuses 18 angepaßten deckelartigen Gehäuseteil mit einem Lagerflansch für die Abtriebswelle 90 dichtend geschlossen. Das Motorengehäuse dieses Ausbildungsbeispiels weist somit ebenfalls im Bereich eines den Arbeitsraum begrenzenden Wandabschnitts eine Teilung auf, wobei die Trennfuge zwischen den Gehäuseteilen so vorgesehen ist, daß die Kolben in vorteilhafter Weise nie über eine Trennfuge laufen.

Die den Arbeitsraum von dem Verbrennungsgemisch-Einspulraum trennenden Wandabschnitte 26″ und 28″ sind in entsprechende schlitzartige Ausnehmungen 39 in dem topfartigen Motorengehäuse 13 einzusetzen und werden in der oben beschriebenen Weise abgedichtet an diesem befestigt. Die Wandabschnitte 26" und 28" weisen annähernd den gleichen Aufbau wie oben beschrieben mit der Ausnahme auf, daß sich die Zylinderkopfplatte 32" an der dem deckelartigen Gehäuseteil 21 zugewandten Seite bis zu dem Außenrand der Befestigungsplatte 30" erstreckt. Im Unterschied zur Kolbenwelle 40 ist hier die Kolbenwelle 40" nur mit dem Spülkolben 60" und dem Arbeitskolben 62" versehen, und die Schwinge 68" wird bei der Montage in geeigneter Weise drehfest an der Kolbenwelle 40" befestigt. Alle weiteren Details dieser Ausbildungsform entsprechen im wesentlichen den zuvor erwähnten Einzelheiten.

Der Verbrennungsringmotor 10" mit einem topfartigen Motorgehäuse ist besonders für Kolben mit winkligem, insbesondere rechteckigem Querschnitt und größerer Kolbenzahl geeignet und bietet ebenfalls deutliche fertigungstechnische Vorteile bei kleinstmöglicher Baugröße und optimaler Funktion.

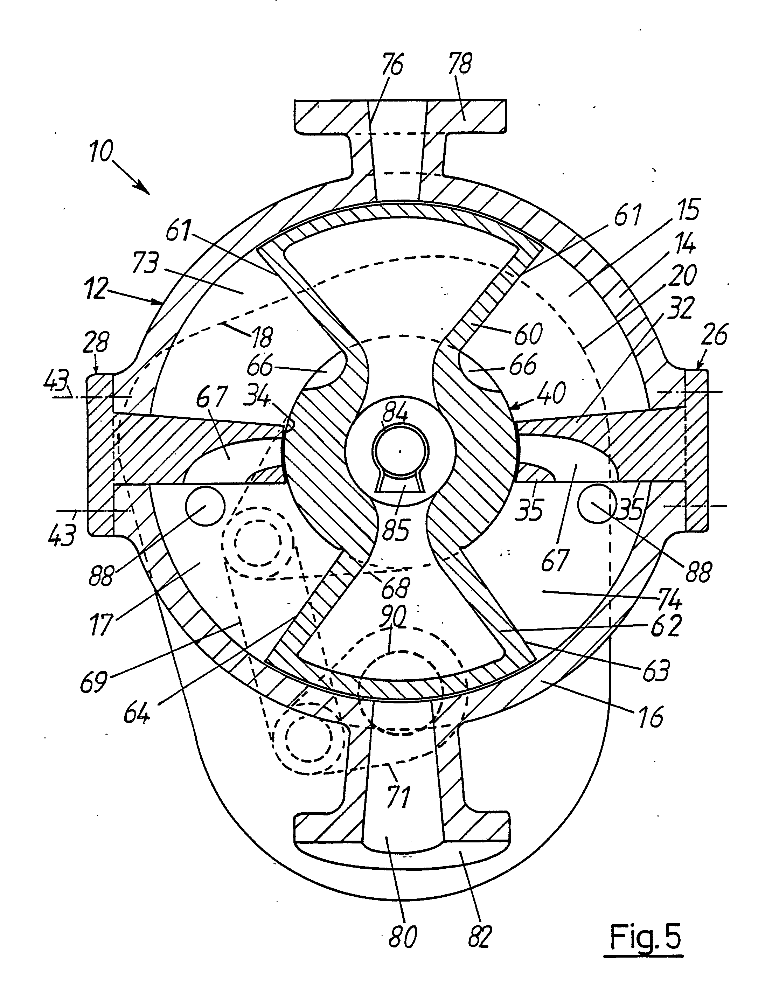

In Figur 5 ist ein vertikaler Schnitt senkrecht zur Kolbenwellenachse durch den zusammengesetzten Verbrennungsringmotor gem. Fig. 4 dargestellt. Der Schnitt verläuft etwa in der Mitte des Motorengehäuses 12, wobei die Schnittansicht in Richtung des Triebwerks dargestellt ist. Die Bezeichnungen der Teile von Figur 5 entsprechen den von Fig.1.

Deutlicher zu erkennen ist in Figur 5, daß die Kolbenwelle 40, der Spülkolben 60 und der Arbeitskolben 62 hohl ausgebildet sind, um diese Teile von innen zu kühlen. Gleichzeitig hat die hohle Ausbildung auch den Vorteil, daß geringere Massenkräfte auftreten und das Gesamtgewicht des Verbrennungsringmotors wesentlich verringert wird. In die hohle Kolbenwelle 40 ist ein Zuführrohr 84 konzentrisch zur Kolbenwellenachse angeordnet, durch das ein gasförmiges Kühlmedium, beispielsweise Luft, in dem Arbeitskolben 62 über dessen gesamte Breite mit Hilfe einer seitlich an dem Zuführrohr 84 angeordneten länglichen Auslaßtrichter 85 gerichtet zuführbar ist.

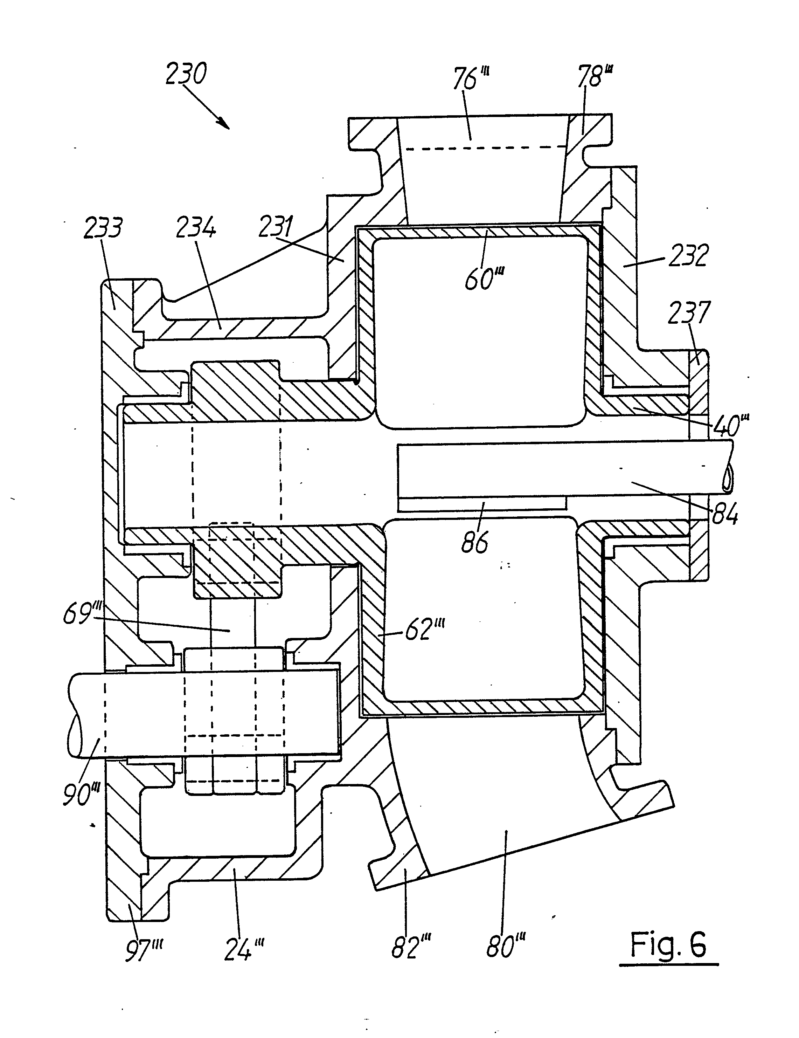

Figur 6 zeigt einen Verbrennungsringmotor 230 mit rechteckigem Kolbenquerschnitt, der aus einem topfartigen Gehäuseteil 231 und einem deckelartigen Gehäuseteil 232 wie der Verbrennungsringmotor 10" gemäß Figur 4 besteht. Wegen des Aufbaues und der Wirkungsweise wird daher Bezug auf die Erläuterungen zu Figur 4 genommen, wobei ergänzend auf die Darstellung des deckelartigen Gehäuseteils 233 zum dichtenden Abschluß des angeformten Triebwerksgehäuses 234 verwiesen wird. Weiterhin wird das Motorgehäuse noch durch einen kleineren Abschlußdeckel 237 im nahen Bereich der Kolbenwelle abgeschlossen.

Ergänzend zu der Darstellung in Figur 1 ist Figur 5 weiterhin zu entnehmen, daß der Luft-oder Verbrennungsgemisch-Einlaß 76 annähernd über die gesamte Breite des Hauptabschnitts 48 der Kolbenwelle 40 verläuft, in Längsrichtung des Motorgehäuses 12 abgerundet ist und sich in seiner Breite aus dem Bereich des Flansches 78 nach innen verjüngt. Die Ausbildung des diametral gegenüberliegenden Auslasses 80 gleicht im wesentlichen der des Verbrennungsgemisch-Einlasses 76, wobei jedoch ein größerer Auslaßquerschnitt vorliegt.

Die Wandabschnitte 26 und 28 sind mit nur durch Strichpunkt dargestellten Schraubbolzen 43 an dem Gehäuseoberteil 14 und dem Gehäuseunterteil 16 des Motorgehäuses 12 abgedichtet befestigt. Sie weisen in ihren Zylinderkopfplatten 32 einen etwa von der Mitte der nach innen weisenden Seite 34 mit wachsendem Querschnitt etwa zur Mitte der Unterseite 35 der Zylinderkopfplatte 32 gebogenen Spülkanalteil 67 auf, der sich in Längsrichtung des Motorgehäuses etwa über die gesamte Breite des Hauptabschnitts 48 der Kolbenwelle 40 erstreckt. Die Ausbildung dieses Spülkanalteils sorgt in günstiger Weise für eine bessere und schnellere Spülung, wobei das Luft-oder Verbrennungsgemisch in den Bereich der äußeren Ecken des Arbeits-bzw. Verbrennungsraums geblasen wird. Der in dem Spülkanalteil 67 gebildete tote Raum dient in vorteilhafter und die Baugröße verringernder Weise mit als Verdichtungsraum. Die über die gesamte Breite des Kolbens erfolgende Beschickung des Arbeitsraums bildet in vorteilhafter Weise eine Voraussetzung für eine Schichtladung, die für die optimale Funktion des Verbrennungsringmotors günstig ist. Die Ausbildung des Spülkanalteils 67 in der entfernbaren Zylinderkopfplatte 32 hat zudem Vorteile für die Reparatur und Wartung.

In dem Gehäuseunterteil 16 des Motorgehäuses 12 sind nahe den Wandabschnitten 26 bzw. 28 bei 88 Zündkerzen eingezeichnet. Gestrichelt sind die äußeren Konturen des Gehäuseoberteils 20 des Triebwerksgehäuses 18 sowie die Schwinge 68, eine an dem Gabelabschnitt 70 der Schwinge 68 angelenkte Pleuelstange 69 sowie die an der Pleuelstange 69 angelenkte Abtriebskurbel 71, die bei der pendelnden Bewegung der Kolben 60 eine gleichsinnige Drehung auf eine ebenfalls gestrichelt angedeutete Abtriebswelle 90 überträgt.

Die Montage der in den Figuren 1 bis 7 dargestellten Ausbildungsbeispiele der erfindungsgemäßen Verbrennungsringmotors ist äußerst einfach, indem die Kolbenwelle zusammen mit den Lagern in dem Gehäuseunterteil angeordnet wird. Hierbei kann der maßgerechte und freie Lauf geprüft werden, da nur für die Kolben vorgesehene Dichtungen in Form von Kolbenringabschnitten und Kolbenringdichtungen an den Zylinderwandungen des Arbeitsraums 17 anliegen. Anschließend werden dann die beiden Wandabschnitte eingesetzt und der Gehäuseoberteil zentriert aufgesetzt. Anschließend erfolgt die Befestigung des oberen Gehäuseteils an dem unteren und die Befestigung der Wandabschnitte mit den entsprechenden Gehäuseabschnitten. Die Montage des zugehörigen Triebwerks erfolgt vorteilhaft gleichzeitig mit der Montage der Kolbenwelle.

Die Montage des in Figur 4 dargestellten Ausbildungsbeispiels eines Verbrennungsringmotors unterscheidet sich demgegenüber, daß die Kolbenwelle zunächst in das topfartige Motorengehäuse eingesetzt wird, daß die Schwinge in dem Triebwerksgehäuse auf dem Schwingenabschnitt der Kolbenwelle befestigt wird, daß dann die Wandabschnitte eingesetzt und befestigt werden und daß nach Prüfung des Laufs der Kolbenwelle und des gleichzeitig vervollständigten Getriebes jeweils die deckelartigen Gehäuseteile für das Motorgehäuse und das Triebwerksgehäuse befestigt werden. Die Lager werden vorteilhaft gleichzeitig mit der Kolbenwelle und den entsprechenden Triebwerksteilen eingesetzt. Schließlich werden bei den vorbeschriebenen Verbrennungsringmotoren noch die weiter unten beschriebenen Systeme zur Schmierung der Kolbenwelle , der Kolben sowie des Triebwerks und das Kühlsystem für die Kolbenwelle und die Kolben sowie ein System für die Kühlung des Motorgehäuses installiert, wobei die beiden Kühlsysteme auch aus einem einheitlichen System bestehen können. Nach Anschluß an eine Verbrennungsgemisch-Zufuhr und an eine Auspuffleitung sowie dem Anschluß der Zündkerzen an ein geeignetes Zündsystem ist dann der erfindungsgemäße Verbrennungsringmotor einsatzbereit.

Nachfolgend wird die Wirkungsweise der in den Figuren 1 bis 7 dargestellten Verbrennungsringmotoren unter besonderer Berücksichtigung der Darstellung von Figur 5 näher erläutert. Wenn sich der Spülkolben 60 in Figur 5 in seiner linken Verschwenkstellung befindet, ist der Verbrennungsgemisch-Einlaß 76 von dem Spülkolben 60 freigegeben, und das Verbrennungsgemisch kann in den ringförmigen Verbrennungsgemisch-Einspülraum 15 eintreten, der stirnseitig durch die Zylinderkopfplatte 32 des Wandabschnitts 26 abgeschlossen ist. Da sich der an der Kolbenwelle im Bereich des Spülkolbens 60 gebildete Spülkanalteil 66 nicht im Bereich des Wandabschnitts 26 befindet, schließt die Kolbenwelle 40 den Verbrennungsgemisch-Einspülraum 15 hermetisch gegen den im Gehäuseunterteil 16 angeordneten ringförmigen Arbeitsraum 17 ab, der in querschnittsgleicher Fortsetzung des ringförmigen Verbrennungsgemisch-Einspülraums 15 gebildet ist. Wenn sich nun der Arbeitskolben 62 aufgrund einer Zündung des im Bereich des Wandabschnitts 26 komprimierten Verbrennungsgemischs zu dem gegenüberliegenden Wandabschnitt 28 bewegt, wird zunächst der Einlaß 76 durch den Spülkolben 60 geschlossen und das Verbrennungsgemisch in dem Verbrennungsgemisch-Einspülraum 15 komprimiert. Im weiteren Verlauf der Bewegung der Kolbenwelle gibt der Arbeitskolben 62 den Auslaß 80 für den Austritt der Verbrennungsprodukte in einen Auspuff frei. In der letzten Phase der Bewegung werden die Verbrennungsprodukte durch das überströmende Verbrennungsgemisch ausgespült, wenn der Spülkanalteil 66 mit dem Spülkanalteil 67 kommuniziert. Die Bewegung des Arbeitskolbens und des diametral gegenüberliegenden Spülkolbens kehrt sich nun aufgrund der im Bereich des Wandabschnitts 28 erfolgten Zündung des dort komprimierten Verbrennungsgemischs um, und der soeben beschriebene Vorgang wiederholt sich wiederum in entgegengesetzter Richtung. Die hin und hergehende Bewegung der Kolbenwelle wird über eine Schwinge und eine Pleuelstange auf eine Abtriebskurbel zur Erzeugung einer gleichsinnigen Bewegung der Abtriebswelle übertragen. In seiner Taktfolge ist dieser Verbrennungsringmotor einem Vierzylinder-Viertakt-Hubkolbenmotor vergleichbar. Er besitzt eine größere Gleichmäßigkeit als eine herkömmliche Zweitakt-Hubkolbenmaschine und läßt sich einschließlich des Treibwerks in einer bis zu einem drittel kleineren Baugröße herstellen. Da der Einlaß und der Auslaß diametral gegenüberliegen, läßt sich der Einlaß und der Auslaß für einen größeren Durchsatz auslegen , und der Kolbenschwenkwinkel von 75 - 85° ist ausreichend groß zur Gewährleistung einer optimalen Bewegungsumsetzung bei großer Leistung.

Der Verbrennungsringmotor läßt sich auch mit einer Kraftstoffeinspritzung in den Einspülabschnitt betreiben, wobei diese Einspritzung vorteilhaft zu einem Zeitpunkt erfolgt, zu dem das Überströmen von in dem Einspülabschnitten enthaltenen Luft in den entsprechenden Teil des Arbeitsraums begonnen hat. Hierdurch ist es in günstiger Weise möglich, daß eine reine Frischluftfront das Ausspülen bis zum Auslaß übernimmt. Außerdem läßt sich vorteilhaft der Brennstoffverbrauch verringern, da kein Gemisch unnötigerweise in den Auspuff gelangt. Gleichzeitig verwirbelt das Gemisch besser und besitzt auch eine längere Verweilzeit zur intensiveren Aufbereitung, so daß auch diese beiden Effekte zur Reduzierung des Kraftstoffverbrauchs und der Schadstoffemission sowie zu einem optimalen Betrieb des Verbrennungsringmotors beitragen.

Ferner besteht die Möglichkeit, mit einer zweiten Einspritzdüse am Ende der Kompression in der Nähe der Zündkerze Brennstoff in den Arbeitsraum einzuspritzen, wobei die jeweiligen Einspritzmengen an jeder Seite zur Erzielung einer optimalen Verbrennung jeweils den gesamten Bedarf decken. Aufgrund der erfindungsgemäßen Ausbildung läßt sich bei dem Verbrennungsringmotor eine günstige Schichtverbrennung erzielen. Auch bei Vergaserbetrieb läßt sich eine günstige Schichtverbrennung verwirklichen, indem vor dem Ansaugen des Gemischs über einen Überströmkanal Frischluft angesaugt wird. Auch in diesem Fall läßt sich wiederum eine Frischluftfront zum Ausspülen erreichen, an die sich am Schluß des Ansaugvorgangs das fette Gemisch schichtartig anschließt. Da sich die Flammenfront kugelförmig ausbreitet, kann der Verbrennungsvorgang bei breiten Arbeitsräumen durch Einsatz von wenigstens einer weiteren Zündkerze verbessert werden.

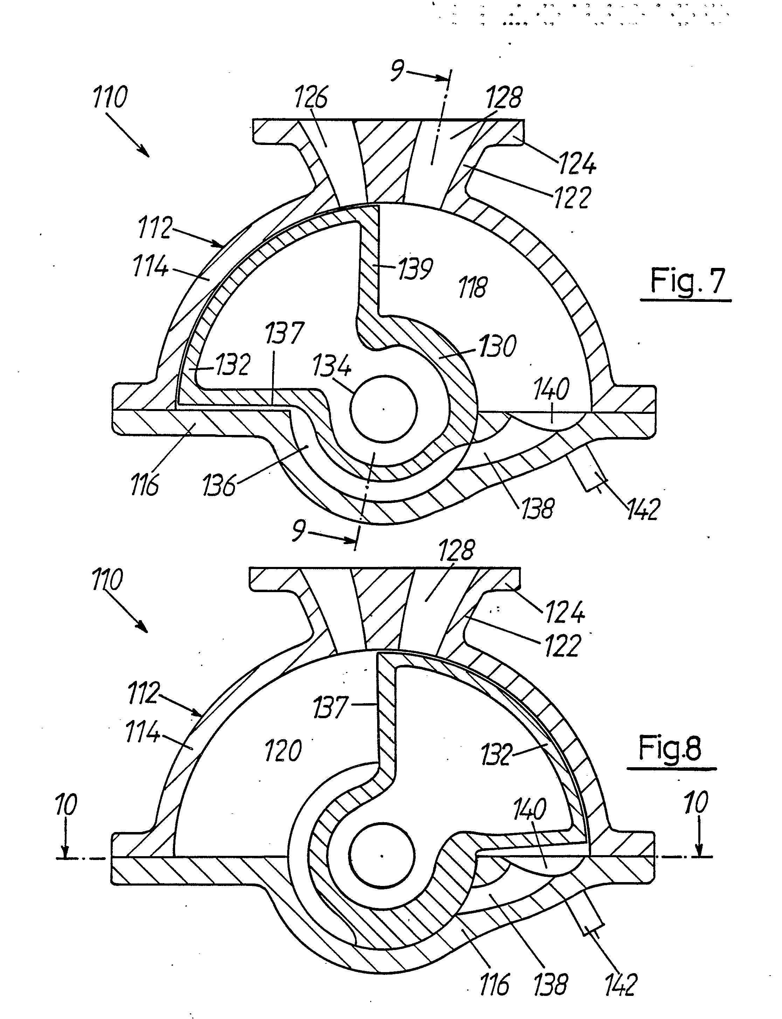

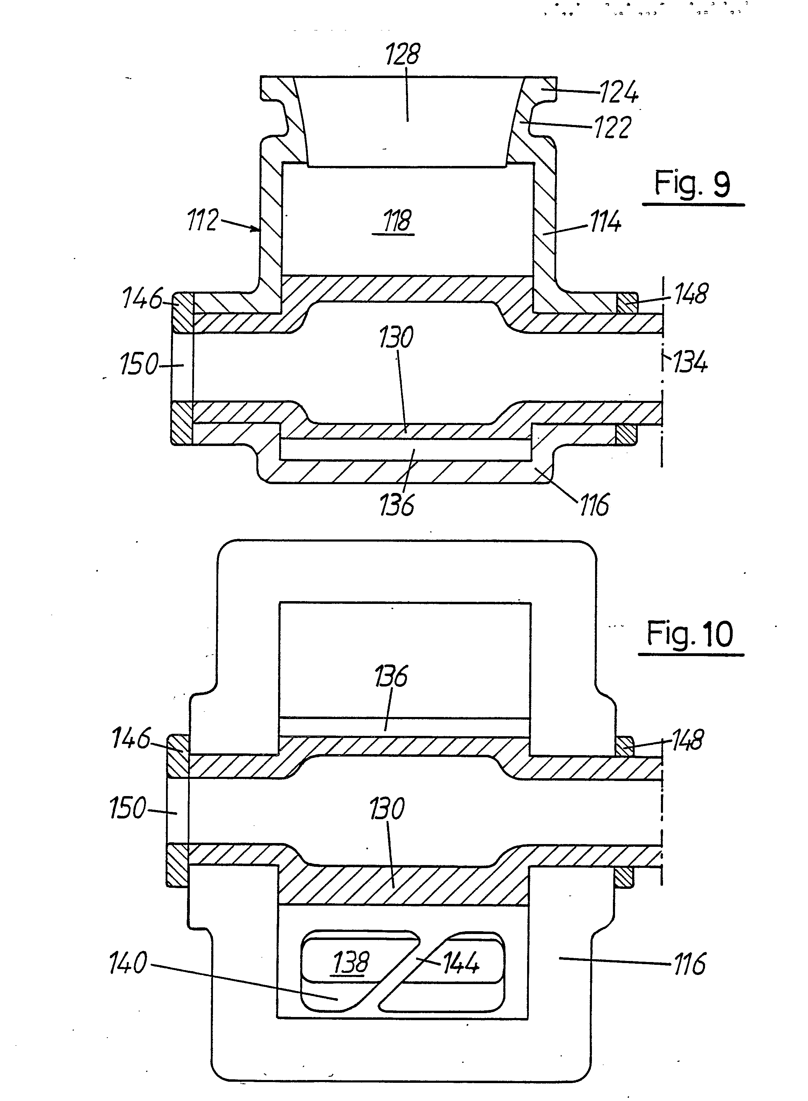

In den Figuren 7 und 10 ist ein weiteres Ausführungsbeispiel eines Verbrennungsringmotors dargestellt, bei dem nur ein Arbeitskolben vorgesehen ist und wobei in den Darstellungen das Triebwerk nebst Gehäuse zur Vereinfachung weggelassen ist. Der Verbrennungsringmotor 110 besteht ebenfalls aus einem zweiteiligen Motorgehäuse 112, das einen halbzylindrischen Gehäuseoberteil 114 und einen deckelähnlichen Gehäuseunterteil 116 aufweist. In dem Gehäuseoberteil 114 ist ein ringförmiger Arbeitsraum 118 gebildet, der sich etwa über einen Schwenkbereich von 90° erstreckt. In querschnittsgleicher Fortsetzung dieses ringförmigen Arbeitsraumes 118 ist ein ebenfalls in dem Gehäuseoberteil angeordneter ringförmiger Verbrennungsgemisch-Einspülraum 120 gebildet. Auf dem Gehäuseoberteil ist ein Stutzen 122 mit einem Flansch 124 vorgesehen, wobei in dem Stutzen ein sich im Querschnitt nach innen verengender und über die Breite des Arbeitskolbens ausgebildeter Einlaßkanal 126 und ein entsprechend ausgebildeter Auslaßkanal 128 mit größerem Querschnitt vorgesehen sind.

In dem Motorengehäuse 112 ist in der Trennebene zwischen dem Gehäuseoberteil 114 und dem Gehäuseunterteil 116 eine Kolbenwelle 130 gelagert, der ein Arbeitskolben 132 mit einem rechteckigen Längsquerschnitt angeformt ist. Die Kolben können auch einen Längsquerschnitt mit anderen Winkeln, beispielsweise eine prismatische Form, oder eine wenigstens teilweise abgerundete Form aufweisen. Die Kolbenwelle 130 und der Arbeitskolben 132 sind hohl ausgebildet, wobei durch eine Kolbenwellenöffnung 134 ein gasförmiges Kühlmedium in nicht dargestellter Weise eingeführt wird. In die Kolbenwelle 130 ist ein Spülkanalteil 136 eingearbeitet, der durch einen teilzylinderförmigen Abschnitt der Gehäuseunterseite 116 vervollständigt wird und der in der in Figur 7 dargestellten Stellung nach dem Einspülen des Verbrennungsgemischs mit einem nur in dem deckelartigen Unterteil 116 gebildeten Spülkanalteil 138 in Verbindung steht, der sich bogenförmig nach oben zu einer taschenförmigen Ausnehmung 140 erweitert, die in dem stirnseitigen Abschnitt des Arbeitsraums gebildet ist, wobei dieser Abschnitt unmittelbar durch die Gehäuseunterhälfte 116 gebildet ist.

Figur 8 zeigt den einkolbigen Verbrennungsringmotor in seiner nach rechts verschwenkten Kompressionsstellung. Das von dem Arbeitskolben, einem Teil des Gehäuseoberteils 114, der sich vorzugsweise über die gesamte Kolbenbreite erstreckenden taschenförmigen Ausnehmung 140, dem Spülkanalteil 138 und der Kolbenwelle 130 eingeschlossene komprimierte Verbrennungsgemisch wird durch eine oder mehrere schematisch dargestellte Zündkerzen 142 gezündet. Aus dem Schnitt 9 wird die Ausbildung der taschenförmigen Ausnehmung 140 mit einem die Befüllung des Arbeitsraums verbessernden Quersteg 144 deutlich. Ferner sind Abschlußdeckel 146 und 148 vorgesehen, wobei sich durch die in der Größe des Innendurchmessers der Lagerabschnitte der Kolbenwelle entsprechende kreisförmige Öffnung 150 des Deckels 144 in nicht dargestellter Weise ein geeignetes gasförmiges Kühlmedium zuführen läßt. Das nicht dargestellte Triebwerk schließt sich hinter dem Deckel 148 an. Es kann z.B. aus einem einfachen und/oder doppelt wirkenden Rollengesperre als Freilaufkupplung beispielsweise für den Direktantrieb eines Generators, bestehen. Kinematisch einwandfrei ist die Funktion allerdings mittels eines aufwendigeren rückwärts angetriebenen Schubkurbelgetriebes.

Die Wirkungsweise des Verbrennungsringmotors 110 läßt sich gut im Zusammenhang mit den Figuren 7 und 8 beschreiben. Wenn sich der Arbeitskolben 132 in seiner linken in Figur 7 gezeigten Stellung befindet, sind die Verbrennungsrückstände aus dem Verbrennungsraum 118 durch den Auslaß 128 ausgespült. Für diese Ausspülung ist ebenfalls der Arbeitskolben 132 verantwortlich, der das aus dem Einlaß 126 zugeführte Verbrennungsgemisch bzw. die Luft in dem Verbrennungsgemisch-Einspülraum 120 eingesaugt und durch die Spülkanalteile 136 und 138 in den Arbeitsraum 118 zum Austreiben der Verbrennungsprodukte eingespült hat. Wenn sich nun der Arbeitskolben aus der in Figur 7 dargestellten Stellung in die Kompressionsstellung gemäß Figur 8 bewegt, verschließt zunächst die Kolbenwelle 130 den Spülkanalteil 138 und anschließend der Arbeitskolben 132 den Auslaßkanal 128. Im weiteren Verlauf der Bewegung wird das eingespülte Verbrennungsgemisch komprimiert und schließlich in der in Figur 8 dargestellten Stellung des Arbeitskolbens durch die Zündkerze 142 gezündet. Der Arbeitskolben 132 beginnt daraufhin, sich wieder in die in Figur 7 dargestellte Stellung zu bewegen, wobei in dem ·VerbrennungsgemischEinspülraum 120 zunächst ein Verbrennungsgemisch angesaugt und/oder zusätzlich eingefügt wird bzw. durch Einspritzung hergestellt wird, das dann nach einer Vorkompression wiederum dem Arbeitsraum 118 zugeführt wird. Die konkrete Ausbildung der Lagerung, der Schmierung, der Spülung sowie des zugeordneten Triebwerks wurden aus Vereinfachungsgründen weggelassen, um die Erläuterung des Grundprinzips der Erfindung nicht durch zusätzliche Details zu belasten. Auch bezüglich dieses Ausführungsbeispiels eines Verbrennungsringmotors gelten die bereits erwähnten herstellungstechnischen Vorteile, die im vorliegenden Fall mit einer besonders geringen Baugröße und einem günstigen Leistungsgewicht mit hervorragendem Wirkungsgrad gepaart sind.

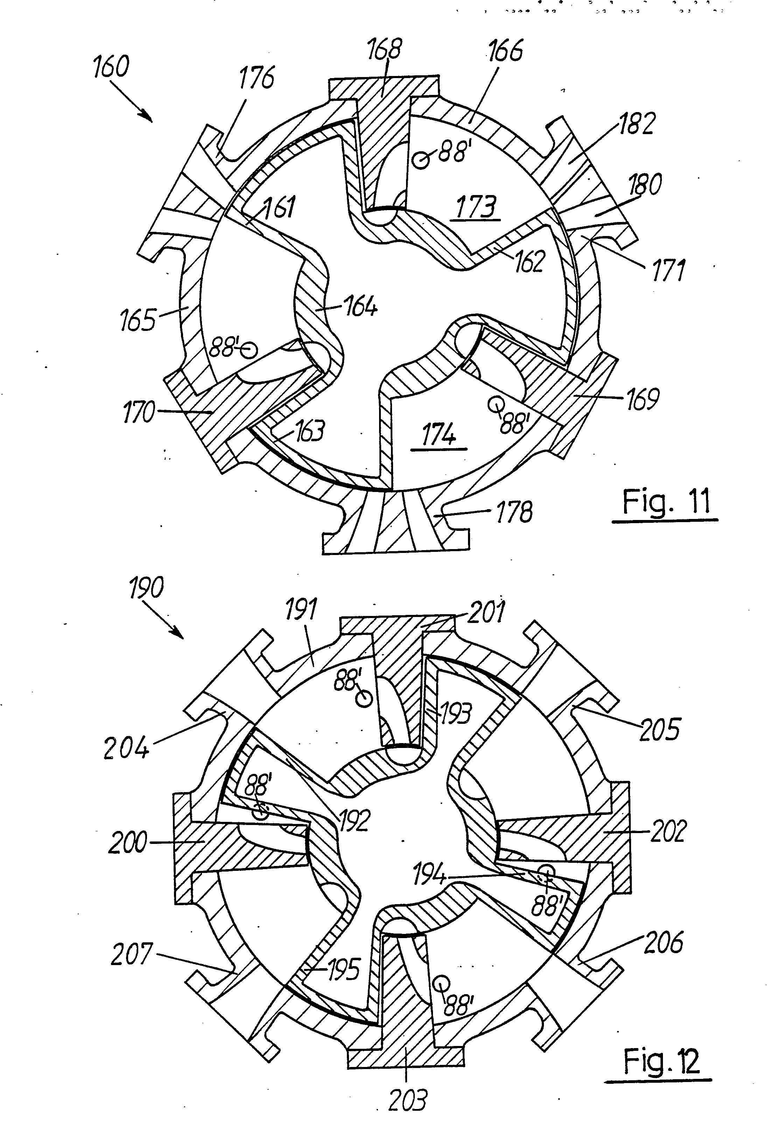

Figur 11 zeigt einen Vertikalschnitt durch ein weiteres Ausführungsbeispiel eines erfindungsgemäßen Verbrennungsringmotors 160 mit einer drei Arbeitskolben 161, 162 und 163 aufweisenden Kolbenwelle 164, wobei das zugeordnete Triebwerk aus Vereinfachungsgründen ebenso weggelassen ist wie Details der Schmierung und Kühlung. Die Kolbenwelle 164 und die einstückig an dieser angeformten Arbeitskolben 161, 162 und 163 sind zu Kühlungszwecken hohl ausgebildet.

Die Kolbenwelle 164 ist zusammen mit den Arbeitskolben 161 bis 163 in einem topfartigen Gehäuse 166 untergebracht, das in nicht dargestellter Weise wie bei dem Ausführungsbeispiel von Figur 5 durch einen deckelartigen Gehäuseteil mit angeformten Lagerflansch dichtend verschließbar ist. In das topfartige Gehäuseteil 166 sind Wandabschnitte 168, 169 und 170,wie in Figur 4 dargestellt, einsetzbar, die abgedichtet befestigt werden. Diese Wandabschnitte besitzen einen Aufbau wie in Figur 5 dargestellt, und trennen insgesamt drei ringförmige Arbeitsräume 172 bis 174 gegeneinander ab, in denen sich jeweils die Arbeitskolben 161 bis 163 hin und her bewegen. Die Kolben, die Wandabschnitte sowie an dem Gehäuse 166 vorgesehene Stutzen 176 bis 178 sind jeweils untereinander um 120° winkelversetzt, wobei zwischen den Wandabschnitten und den benachbarten Stutzen jeweils ein Winkel von ca. 60° existiert. In jedem der Stutzen 176 bis 178 sind jeweils ein Einlaßkanal 180 und ein Auslaßkanal 182 gebildet, die,wie oben beschrieben, ausgebildet sind. Die Konfiguration des Verbrennungsringmotors 160 mit drei Arbeitskolben dient in günstiger Weise zur Erhöhung des Drehmoments bei gleicher Leistung. Zur Erläuterung der Wirkungsweise des in Figur 11 in seiner Einspülstellung gezeigten Verbrennungsringmotors 110 wird entsprechend auf die Erläuterungen zu den in den Figuren 7 bis 10 dargestellten Verbrennungsringmotor 110 verwiesen.

Eine weitere Erhöhung des Drehmoments bei gleicher Leistung läßt sich durch einen Verbrennungsringmotor 190 erzielen, der in der Figur 12 - schematisch dargestellt ist und insgesamt vier Kolben aufweist. Die Kolben bestehen aus den Arbeitskolben 192 und 194, die in ringförmigen Arbeitsräumen 196 und 198 pendelnd arbeiten, sowie aus den Spülkolben 193 und 195, die in den ringförmigen Luft- bzw. Verbrennungsgemisch-Einspülräumen 197 und 199 pendelnd arbeiten. Es sind vier Wandabschnitte 200 bis 203 sowie vier Stutzen 204 bis 207 vorgesehen, die jeweils untereinander gleichwinklig beabstandet sind. Die Wandabschnitte 200 bis 203, die die Zylinderkopfplatten bilden, schließen mit den jeweils benachbarten Stutzen 204 bis 207 den selben Winkel ein. Einlaßkanäle sind in den Stutzen 205 und 207 gebildet, während in den Stutzen 204 und 206 Auslaßkanäle vorgesehen sind. Die Wirkungsweise dieses Verbrennungsringmotors 190 ergibt sich entsprechend aus der Beschreibung der Wirkungsweise der Figuren 1 bis 6. Für die in den Figuren 11 und 12 gezeigten Motoren gelten die bereits zuvor geltend gemachten fertigungstechnischen Vorzüge und die Vorteile hinsichtlich kleinster Bauart und optimalen Arbeitsverhaltens.

Die Ein-und Auslaßkanäle liegen bei ungerader Kolbenzahl immer nebeneinander, während sie aufgrund der anderen Wirkungsweie bei gerader Kolbenzahl sowohl nebeneinander als auch bevorzugt einander gegenüberliegen. Verbrennungsringmotoren mit gerader Kolbenzahl arbeiten gleichmäßiger, die mit ungerader Kolbenzahl haben indessen. vergleichsweise ein doppelt so hohes maximales Drehmoment und brauchen demzufolge auch stärkere Triebwerksauslegungen.

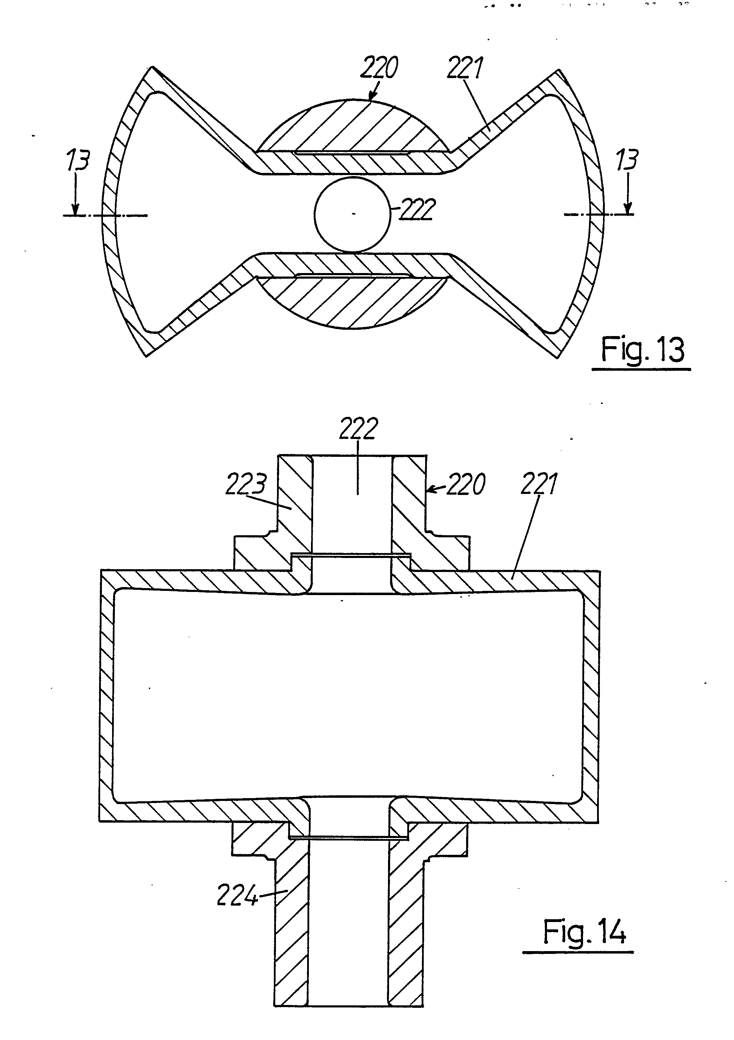

Figur 13 zeigt einen Schnitt durch eine zusammengesetzte Einheit aus einer Kolbenwelle 220 und einem hohlen Doppelkolben 221, wobei einer der Kolben als Spülkolben und der andere als Arbeitskolben vorgesehen ist. Auch hier besitzt die Kolbenwelle 220 zu Kühlungszwecken eine Bohrung 222. Diese Kolbenwelle-Doppelkolbeneinheit ist für die Her stellung größerer Verbrennungsringmotoren günstig und bietet Vorteile bei der Bearbeitung, der Montage, der Reparatur sowie der Wartung.

Figur 14 stellt einen Schnitt entlang der Schnittlinie 13-13 in Figur 13 dar und verdeutlicht - schematisch, daß die Kolbenwelle 220 aus zwei Teilen 223 und 224 besteht, die beiderseits des Doppelkolbens 221 angeflanscht sind.

Der Verbrennungsringmotor 230 besitzt eine Kühlung mit einem gasförmigen Medium, das an einer Seite der hohlen Kolbenwelle durch ein Zuführrohr in den Arbeitskolben durch einen Auslaßtrichter gerichtet zugeführt wird, wobei das gasförmige Medium, insbesondere Luft, an derselben Seite der hohlen Kolbenwelle austritt (siehe auch Fig.5).

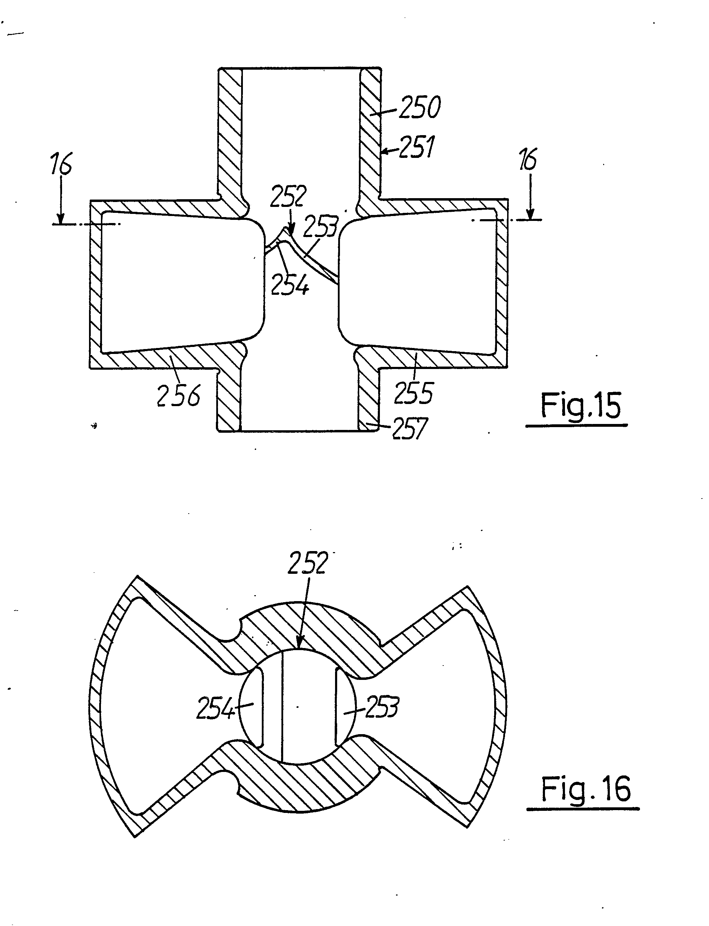

In der Figuren 15 und 16 ist ein Längsschnitt durch eine modifizierte Kolbenwelle mit einstückig ausgebildeten Kolben zur Darstellung einer vorteilhaften Durchlaufkühlung gezeigt. In den hohlen Lagerabschnitt 250 der Kolbenwelle 251 wird ein gasförmiges Medium eingeführt, dessen Strömung durch ein versetzt angeordnetes Leitelement 252 in den Arbeitskolben 255 und den Spülkolben 256 umgelenkt wird. Dabei sorgt die bezüglich der Kolben versetzte Anordnung des Leitelements 252 mit seinen unterschiedlich langen Leitflächen 253 und 254 dafür, daß das gasförmige Kühlmedium überwiegend in den nächstliegenden Abschnitt des Arbeitskolbens 255 und zu einem geringeren Teil in den nächstliegenden Abschnitt des Spülkolbens 256 eintritt, beim Vorbeistreichen an den Innenwänden Wärme aufnimmt und dann durch den gegenüberliegenden Lagerteil 257 der hohlen Kolbenwelle 251 nach Art einer Durchlaufkühlung austritt. Figur 16 stellt einen Schnitt entlang der Schnittlinie 16-16 in Figur 15 dar und veranschaulicht die Ausbildung und Anordnung des Leitelements 252.

Für die Kühlung können auch noch zusätzliche Kühlrippen am Kolben vorgesehen sein, um die Gebläsekühlung zu verstärken. Weiterhin ist eine zusätzliche Kühlung des Kühlmittels, insbesondere für Hochleistungsmotoren, günstig.

Die Kolbenwellen bestehen aus Wärme gut leitenden Werkstoffen mit geringem spez. Gewicht, z.B. Alu-Legierungen mit 8 - 14 % Si und/oder 5 - 10 % Cu und anderen geringen Zusätzen von Metall. Sie können ferner auch aus keramischen Werkstoffen hergestellt werden.

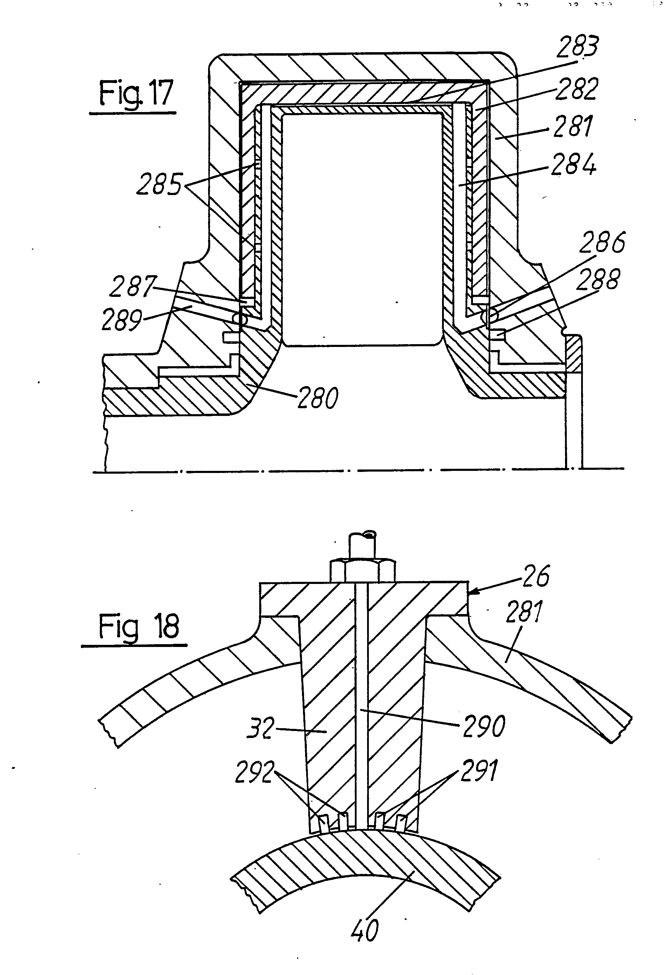

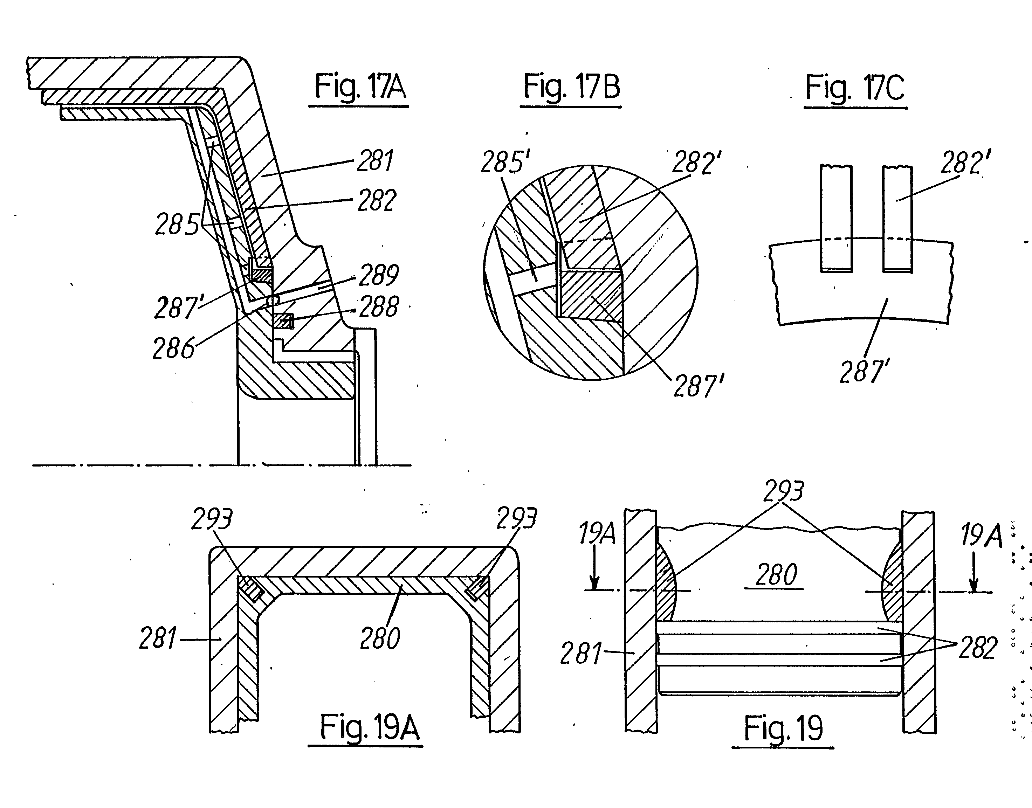

Figur 17 zeigt in einem Teilschnitt durch eine Verbrennungsringmotorhälfte Einzelheiten der Schmierung und Dichtung eines Kolbens 280, der sich pendelnd in einem Gehäuseteil 281 bewegt. Der Kolben weist einen Kolbenringabschnitt 282 auf, der sich in Figur 17 U-förmig über den Kolben 280 erstreckt und in eine in den Kolben eingefräste Nut 283 eingesetzt ist. Unterhalb der Nut 283 ist in dem Kolben 280 an beiden Seiten in Längsrichtung des Motors gesehen eine Schmierölbohrung 284 eingebracht, welche durch kleine Öffnungen 285 den die Dichtung bildende Kolbenringabschnitt 282 mit Öl versorgt. Die beiden seitlichen Ölzufuhrkanäle kommunizieren im Bereich des U-Abschnitts des Kolbenringabschnitts 282 miteinander und bilden dort ein Schmierfilmlager in der eingefrästen Nut. Die Ölzufuhr zu den Kanälen 284 erfolgt unterhalb des Kolbenringabschnitts 282 durch einen im Gehäuse 281 gebildeten Ringkanal 286, der über eine Leitung 289 mit Öl versorgt wird.

Unterhalb bzw. näher zur Kolbenwellenachse weist das Gehäuse 281 eine Ringdichtung 288 auf. Bei kleineren Motoren kann die Ölzufuhr über kleine Ölvorratsbehälter erfolgen, während bei größeren Verbrennungsringmotoren eine Zentralschmieranlage mit Ölpumpe vorgesehen ist. Die Lager der Kolbenwelle können an das Schmiersystem angeschlossen sein, sofern es sich um Gleitlager handelt. Bei Nadellagern kann dies zum Teil entfallen.

Durch diese Ausbildung des erfindungsgemäßen Verbrennungsringmotors wird eine wirkungsvolle Kolbenschmierung erreicht, die von der Unterseite des Kolbenringabschnitts erfolgt und ein zuverlässiges Arbeiten ermöglicht.

Figur 17A zeigt ähnlich wie Figur 17 einen Teilschnitt durch eine Verbrennungsringmotorhälfte, hier jedoch für einen prismaförmigen Arbeitskolben. In Figur 17B ist die Axialdichtung 287' vergrößert dargestellt. Der Kolbenringabschnitt 282' greift in die Axialdichtung 287' ein, damit ein Gasdurchlaß verhindet wird und die Axialdichtung während des Betriebs nicht unnötigerweise wandert. Figur 17C zeigt die Darstellung der Axialdichtung 287' und der Kolbenabschnitte 282' in Draufsicht, wobei zur Vereinfachung die übrigen Teile weggelassen sind.

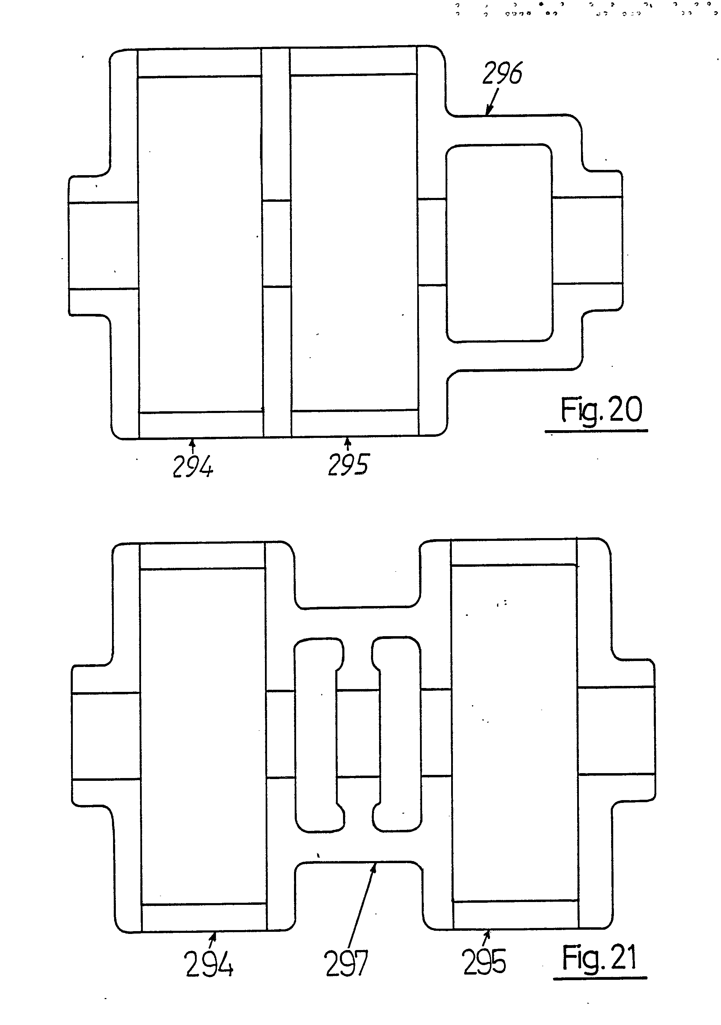

Figur 18 zeigt eine mögliche Ausbildung der Schmierung der Kolbenwelle seitens der Zylinderkopfplatte 32 eines Wandabschnitts 26 bzw. 28, wobei Öl durch einen oder mehrere mittige Kanäle 290 auf die Kolbenwelle 40 innerhalb von zwei sich über die Breite des Motors erstreckenden Dichtungspaaren 291 und 292 in günstiger Weise verteilt wird.

Figur 19 zeigt eine schematische Draufsicht auf einen Kolben mit einem rechteckigen Querschnitt zur Darstellung der Eckendichtung, ähnlich wie in Figur 17. Der mit rechten Winkeln versehene Kolben 280 gleitet in dem Gehäuseteil 281. Die Eckendichtung 293 ist hinter die Kolbenringabschnitte 282 in eine mittels eines Fräsers in den Kolben eingearbeitete Nut eingebracht. Sie kann vorteilhaft auch zwischen den beiden Kolbenringabschnitten 282 angeordnet sein. Figur 19A zeigt einen Querschnitt des Kolbens 280 in dem Motorgehäuse 281, wobei die Eckendichtungen 293 so eingesetzt sind, daß sie den die Ecke bildenden Winkel halbieren. Die vorgesehene Eckendichtung 293 ist unabhängig von dem Kolbenringabschnitt 282 mit einer dem jeweiligen Eckprofil entsprechenden Form selbst einstellend und verschleißausgleichend ausgebildet.

Figur 30 zeigt eine schematische Darstellung der Anordnung von zwei einstückig miteinander verbundenen erfindungsgemäßen Verbrennungsringmotoren 294 und 295 mit einem gemeinsamen Triebwerk 296. Die beiden Verbrennungsringmotoren und das Triebwerk sind in einem geteilten Gehäuse angeordnet, das horizontal in der Ebene der Kolbenwelle geteilt ist. Die Verbrennungsringmotoren 294 und 295 besitzen eine Ausbildung wie der in der Figur 1 dargestellte Verbrennungsringmotor 10 und sind mit einer gemeinsamen Kolbenwelle gebildet, die sich in das angeformte Triebwerksgehäuse erstreckt. Durch diese Aneinanderreihung von Verbrennungringmotoren, die auch nach Art des Baukastensystems aus Einzelmodulen mit geeigneten Anschlußelementen bestehen können, lassen sich Verbrennungsringmotoren mit größeren Leistungen in kleiner Baugröße und problemloser Fertigung herstellen. Die in Figur 20 dargestellte Einheit ist in ihrem Betrieb mit einem konventionellen 8-Zylinder-Viertakt-Hubkolbenmotor vergleichbar.

Eine alternative Ausbildung einer derartigen Einheit zeigt die schematische Darstellung von Figur 21 bei der zwei Verbrennungsringmotoren 294 und 295 unter Zwischenschaltung eines Triebwerks 297 miteinander verbunden sind. Bei den in den Figuren 20 und 21 dargestellten Einheiten kann auch einer der Verbrennungsringmotoren als baugleicher Kompressor ausgebildet sein, um den Verbrennungsringmotor zur weiteren Leistungserhöhung aufzuladen. Statt des Kompressors kann auch in vorteilhafter Weise eine gleichartig aufgebaute Pumpe mit dem Verbrennungsringmotor verbunden sein. Der erfindungsgemäße Verbrennungsringmotor erlaubt demgemäß in günstiger Weise eine kompakte Ausbildung kompletter Einheiten bei kleiner Baugröße in einem fertigungstechnisch vorteilhaftem Herstellungsverfahren. Die Einheiten können problemlos an die jeweils gewünschten Leistungsanforderungen angepaßt werden.

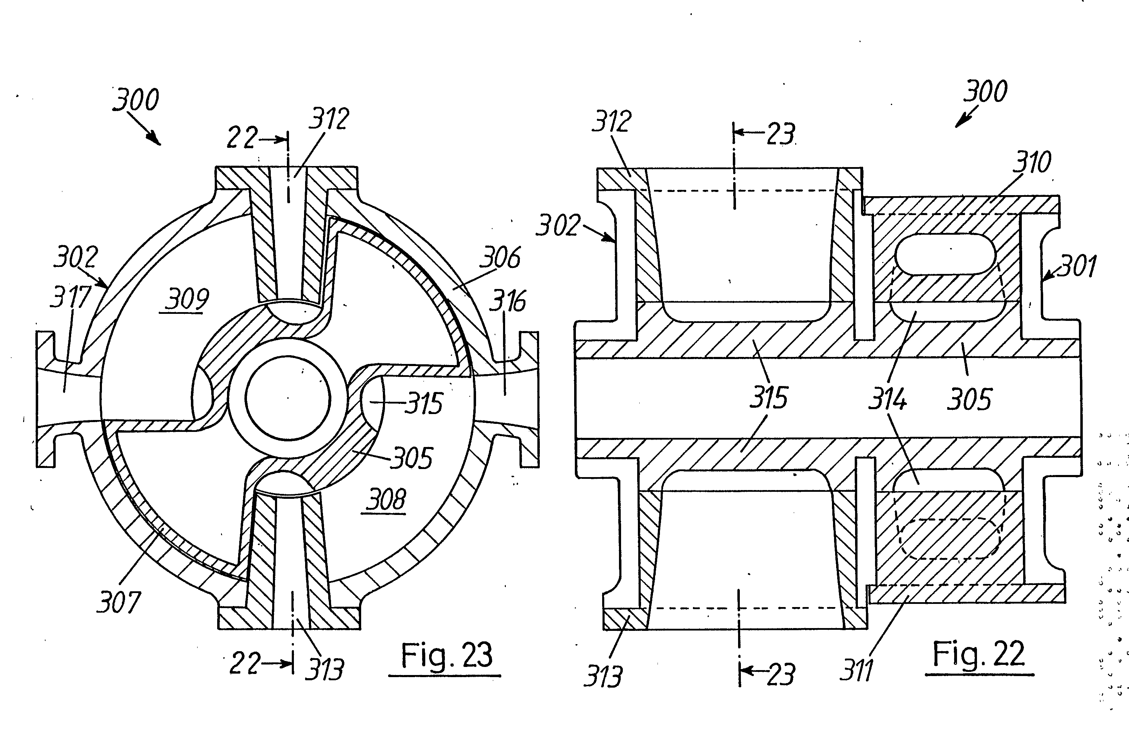

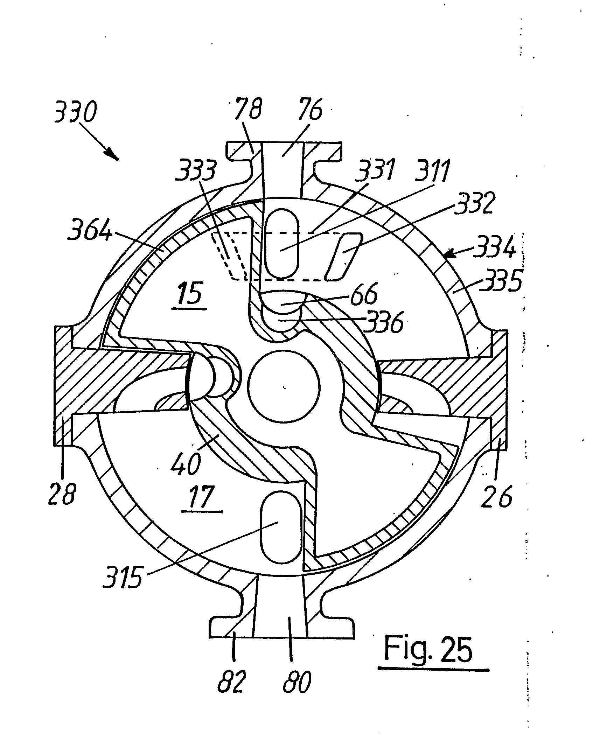

Figur 22 zeigt einen Längsschnitt durch eine Verbrennungsringmotor-Kompressor-Einheit 300, die aus einem Verbrennungsringmotor 301 und einem Kompressor 302 besteht. Der Verbrennungsringmotor 301 hat den Aufbau eines in den Figuren 1 bis 6 dargestellten Verbrennungsringmotor , ist jedoch nicht mit einem Triebwerk verbunden. Die Kolbenwelle 305 ist stattdessen einstückig mit den vom Kolben 306 und 307 gebildet, die in Pumpräumen 308 und 309 in dem Gehäuse des Kompressors 302 hin und her pendeln.

Der in Figur 22 dargestellte Schnitt durch die Verbrennungsringmotor-Kompressor-Einheit liegt in der Teilungsebene des gemeinsamen Gehäuses. Wie bei den Gehäusehälften von Fig. 1 sind auch hier in entsprechenden Ausnehmungen der Gehäusehälften Zylinderkopfplatten bzw. Wandabschnitte 310 und 311 sowie 312 und 313 im Bereich des Kompressors vorgesehen, wobei die Platten entsprechend abgedichtet in nicht dargestellter Weise befestigt sind. Die Kolbenwelle 305 ist wiederum hohl ausgebildet, um eine Kühlung der Kolben von innen vorzusehen und Gewicht einzusparen. In der Kolbenwelle 305 sind im Bereich des Verbrennungsringmotors Spülkanäle 314 und im Bereich des Kompressors Spülkanäle 315 eingearbeitet. Die in den Wandabschnitten 312 und 313 des Kompressors 302 gebildeten Kanäle stellen Auslaßkanäle dar für das zu komprimierende Medium dar, das durch Einlaßstutzen 316 und 317 in den Kompressor eingesaugt wird.

Die in den Figuren 22. und 23 dargestellte Verbrennungsringmotor-Kompressor-Einheit zeichnet sich durch eine besonders kleine und kompakte Bauart aus, die aufgrund der vorgesehenen Gehäuseteilung und den einsetzbaren Wandabschnitten besondere fertigungstechnische Vorzüge besitzt. Die Wirkungsweise des Kompressors ist mit dem eines 4-Zylinder-Kompressors vergleichbar.

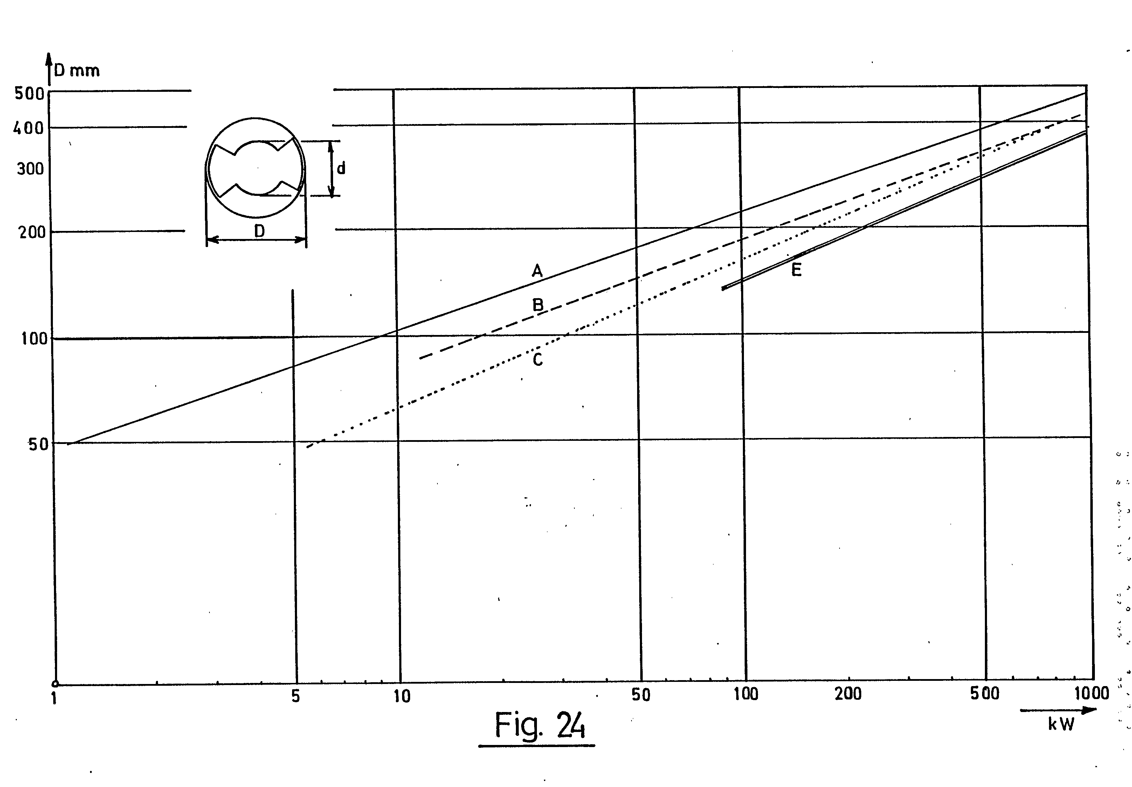

Figur 24 zeigt eine graphische Darstellung, die die leistungsbezogene Baugröße verschiedener erfindungsgemäßer Ver brennungsringmotoren darstellt. Der Durchmesser des ringförmigen Arbeitsraumes ist mit D bezeichnet, während der Durchmesser der Kolbenwelle mit d bezeichnet ist. Das Diagramm zeigt verschiedene Ausbildungsformen des erfindungsgemäßen Verbrennungsringmotors, wobei die mit A bezeichnete Kennlinie einen Verbrennungsringmotor wie in Figur 1 dargestellt bezeichnet, bei dem die Breite b des Arbeitskolben ( in Längsrichtung des Motors parallel zur Kolbenwellendrehachse gesehen ) gleich der Differenz $(D-d)/2 = h$ ist. Die Kennlinie B kennzeichnet einen Motor wie in Figur 1 dargestellt, bei dem $b = 2.h$ ist. . Die Kennlinie C kennzeichnet einen Motor gemäß Figur 1 mit einer Benzineinspritzung in den Arbeitsraum, und die mit E gekennzeichnete Kennlinie gibt die Baugröße der in den Figuren 20 und 21 dargestellten Einheiten für $b = h$ wieder. Das Diagramm dokumentiert deutlich, daß sich mit der Erfindung Motoren herstellen lassen, die auch bei großen Leistungen eine außerordentlich geringe Baugröße besitzen, die nur ein Drittel des Gewichts der Baugröße und der Herstellungskosten im Vergleich zu konventionellen Hubkolbenmotoren aufweisen, wobei insbesondere gegenüber den konventionellen Zweitaktmotoren ein bis zu 40% geringerer Brennstoffverbrauch erzielt werden kann. Alle bekannten Verfahren zur Reduzierung des Kraftstoffbedarfs und der Schadstoffemission , wie die Verwendung eines Katalysators mit Lambda-Sonden sind möglich, beispielsweise die elektronisch gesteuerte Einspritzung, der eletronische Vergaser, Platin-Mittelelektroden-Zündkerzen. Weiterhin kann die bekannte Vorverdichtung der Ansaugluft oder des Kraftstoffluftgemischs ohne leistungsmindernde Vorverdichtung im Zylinder selbst mittels Abgasturboladers oder besonders vorteilhaft durch gleichartig aufgebaute Schwingkolbenverdichter (vergl. Figur 23) erreicht werden. Besonders einfach und billig läßt sich demgegenüber jedoch eine Leistungssteigerung durch eine Verbreiterung der Kolben erreichen. Die oben angesprochene Schichtladung der Arbeitsräume und damit die vorteilhafte Schichtverbrennung läßt sich bei dem erfindungsgemäßen Verbrennungsringmotor ebenso einfach verwirklichen wie die teilweise Rückführung von Abgasen in den Verbrennungskreislauf. Schließlich ist noch von Vorteil, daß wegen der geringen bewegten Teilezahl die innere Reibung des erfindungsgemäßen Verbrennungsringmotors und der mit diesen aufgebauten Einheiten klein ist, wodurch auch dür das Anlassen des Motors nur verhältnismäßig kleine Anlasser und schwache Batterien selbst bei niedrigen Außentemperaturen erforderlich sind.

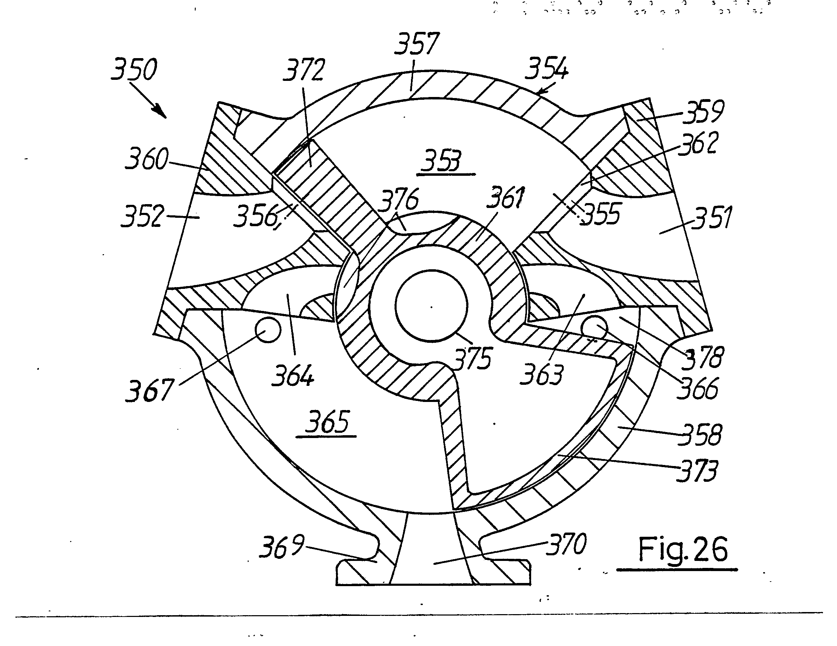

In Fig. 25 ist ein vertikaler Schnitt senkrecht zur Kolbenwellenachse durch ein weiteres Ausführungsbeispiel eines Verbrennungsringmotors 330 dargestellt.

Das Motorgehäuse 334 weist eine obere Gehäusehälfte 335 auf. In der oberen Gehäusehälte 331 mit einem annähernd konstanten Querschnitt vorgesehen, der etwa parallel zur horizontalen Teilungsebene des turbinenartig aufgebauten Motorgehäuses 334 verläuft. Der Druckausgleichskanal 331 mündet beiderseits der durch die Mitte des Einlaßkanals 76 und die Drehachse der Kolbenwelle 40 verlaufenden Ebene in Öffnungen 332 und 333. Diese Öffnungen besitzen den gleichen Querschnitt wie der Druckausgleichskanal 40, wobei ihre Kanten radial zur Kolbenwellenachse geneigt sind. Die Öffnungen sind in dem Einspülraum 15, bezogen auf die senkrechte Ebene durch die Mitte des Einlaßkanals 76 und die Drehachse der Kolbenwelle 40 beiderseits in einem Winkelbereich zwischen 15 und 33° angeordnet. In Fig. 25 erstrecken sich die Öffnungen jeweils in einem Winkelbereich zwischen 21 und 28°.

Der Druckausgleichskanal 331 steht nur mit den beiden Hälften des Einspülraums 15 in Verbindung und trägt zur Verringerung von Ansaugverlusten bei, indem er ein früheres Ansaugen der Luft bzw. des Verbrennungsgemischs bei der Be wegung des Spülkolbens 64 ermöglicht.

Zur Verringerung von Vorkompressionsverlusten sind unterhalb der Kanalabschnitte 66 zylinderförmige Ausnehmungen 336 als Speicherpolster vorgesehen, die sich wenigstens teilweise über die gesamte axiale Breite des Spülkolbens erstrecken. Diese Speicherpolster erzielen zusammen mit den Kanalabschnitten 66 eine deutliche Verringerung der Vorkompressionsverluste in der Größenordnung zwischen 10 und 20 % und sorgen gleichzeitig für eine ideale Gleichstromspülung mit den daraus resultierenden Vorteilen.

Fig. 26 zeigt einen vertikalen Schnitt senkrecht zur Kolbenwellenachse durch ein weiteres Ausführungsbeispiel eines Verbrennungsringmotors 350, der zwei Einlaßkanäle 351 und 352 aufweist, die an den Stirnseiten des ringförmigen Einspülraums 353 münden und jeweils durch ein nur -schematisch angedeutetes Ventil 355 bzw. 356 verschlossen sind, welche bei Auftreten eines Ansaugdrucks in dem Einspülraum 353 öffnen.

Das Motorgehäuse 354 besteht aus einer oberen deckelartigen Gehäusehälfte 357 und einer unteren Gehäusehälfte 358, wobei beide Gehäusehälften eine in etwa teilzylindrische Außenform besitzen und über im wesentlichen oberhalb der Drehachse der Kolbenwelle 361 angeordnete Wandabschnitte 359 und 360 in nicht dargestellter Weise abgedichtet miteinander verbunden sind.

Der Einlaßkanal 351 ist in dem rechten Wandabschnitt 359 gebildet und erstreckt sich mit einem kreisförmigen Querschnitt nach innen verjüngend bogenförmig zum Einspülraum 353. In seinem Mündungsbereich ist das nur schematisch angedeutete Ventil 355 vorgesehen, das gegen einen passend zugeordneten Ventilsitz 362 an den Wandabschnitt 359 zur dichtenden Anlage bringbar ist. Für das Ventil 355 ist eine entsprechende nicht dargestellte Ventilführung vorgesehen. Spiegelbildlich zu der senkrechten Ebene durch die Drehachse der Kolbenwelle 361 ist der andere Einlaßkanal 352 in dem Wandabschnitt 360 ausgebildet.

In den Wandabschnitten 359 und 360 sind weiterhin Einspülkanalabschnitte 363 bzw. 364 vorgesehen, die in ihrer Ausbildung den Kanälen 67 gemäß Fig. 5 vergleichbar sind. Die Einspülkanalabschnitte 363 bzw. 364 münden wiederum in einen ringförmigen Arbeisraum 365, der in querschnittsgleicher Fortsetzung zu dem ringförmigen Einspülraum 353 in der unteren Gehäusehälfte 358 gebildet ist. Mit Kreisen sind eingesetzte Zündkerzen 366 und 367 angedeutet, die in einer axialen Seitenwand des Arbeitsraums 365 unmittelbar vor der Mündung der Einspülkanalabschnitte 363 bzw. 364 angeordnet sind.

An der unteren Gehäusehälfte 358 ist ein Auslaßflansch 369 gebildet, der einen Auslaßkanal 370 enthält. Dieser Auslaßkanal 370 erstreckt sich etwa über die gesamte Breite des Arbeitsraums mit einem annähernd rechteckigen Querschnitt, der sich zum Gehäuseinneren hin verjüngt. In nicht dargestellter Weise können auch seitliche Auslaßkanalabschnitte vorgesehen sein, die mit dem Auslaßkanal 370 verbunden sind und sich bis über die gesamte Höhe des Arbeitsraums 365 erstrecken können. Durch eine derartige Auslaßkanalkonfiguration wird das Austreten bzw. Ausspülen der Verbrennungsprodukte aus dem Arbeitsraum 365 nach Art einer sogenannten Gleichstromspülung deutlich verbessert.

Die Kolbenwelle 361 ist in nicht dargestellter Weise in dem Motorgehäuse 354 mehrfach in geeigneter Weise gelagert. Sie ist einstückig mit einem Spülkolben 372 und einem diametral zu diesem angeordneten Arbeitskolben 373 ausge bildet. Der Spülkolben 372 besitzt einen in etwa rechteckförmigen massiven Querschnitt, während der Arbeitskolben 373 ebenso wie die Kolbenwelle 361 ausgebbildet ist und einen trapezförmigen bzw. kreissegmentabschnittförmigen Querschnitt besitzt. Die hohle Ausbildung der Kolbenwelle 361 und des Arbeitskolbens 373 dient nicht nur zur Massenverringerung, sondern auch für eine geeignete Innenkühlung durch ein massekräftefreies gasförmiges Kühlmedium, das durch eine Öffnung 375 in die Kolbenwelle 361 eingeführt wird.

Die Kolbenwelle 361 weist etwa am Fuße des Spülkolbens 372 an dessen beiden Seiten sich über die gesamte Kolbenbreite erstreckende Kanalabschnitte 376 auf, die taschenartig in die Kolbenwelle 361 mit einer bogenförmigen Krümmung eingearbeitet sind. Die Kanalabschnitte 376 dienen im Zusammenhang mit den Einspülkanalabschnitten 363 bzw. 364 zum Einspülen von Luft bzw. eines Verbrennungsgemischs aus dem Einspülraum 353, wenn sich der Spülkolben auf Grund seiner hin-und hergehenden Bewegung in dem Einspülraum 353 dem jeweiligen Wandabschnitt 359 bzw. 360 nähert.

Abweichend von den bisherigen Ausführungsbeispielen ist der Spülkolben 372 nicht hohl, sondern massiv ausgebildet. Hierdurch kann der Spülkolben so schmal ausgebildet werden, daß trotz eines vergleichsweise kleineren Einspülraums 353 ein ausreichend großer Schwingwinkel für den Arbeitskolben 373 zur Verfügung steht.

In Fig. 26 ist der Arbeitskolben 373 in seiner rechten Kompressionsstellung dargestellt, wobei das Verbrennungsgemisch in einem Kompressionsraum komprimiert ist, der aus einem keilförmigen Abschnitt 378 und dem Einspülkanalabschnitt 363 besteht, welcher durch die Außenfläche der Kolbenwelle 361 abgesperrt ist. Auf Grund dieser Kompressionsraumkonfiguration kann ein großer Schwingwinkel er zielt werden, da der Einspülkanalabschnitt 363 als Kompressionsraum einbezogen worden ist.

Die Ventile 355 und 356 stellen sogenannte ungesteuerte Einlaßventile dar, die auf Grund des bei ihnen auftretenden Differenzdruckes öffnen oder schließen. Sie können auch durch in herkömmlicher Weise mechanisch zwangsgesteuerte Einlaßventile ersetzt sein. Durch das Vorsehen der Einlaßventile werden Ansaugverluste deutlich verringert. Zur Verringerung von Vorkompressionsverlusten können zudem unterhalb der Kanalabschnitte 376 in der Kolbenwelle 361 in nicht dargestellter Weise Speicherpolster vorgesehen sein. Die Einlaßüberströmkanäle 363 und 364 tragen nicht nur zur Verringerung der Vorkompressionsverluste bei, sondern ermöglichen auch gleichzeitig die bereits angesprochene Gleichstromspülung, mit der sich eine ideale Schichtung und damit eine Schichtverbrennung realisieren lassen. Zusammen mit den unsymmetrisch ausgebildeten Kolben, durch die ein größerer Schwenkwinkel erreicht wird, erzielen diese Maßnahmen eine wesentliche Verbesserung des Wirkungsgrades und damit eine deutliche Leistungssteigerung.

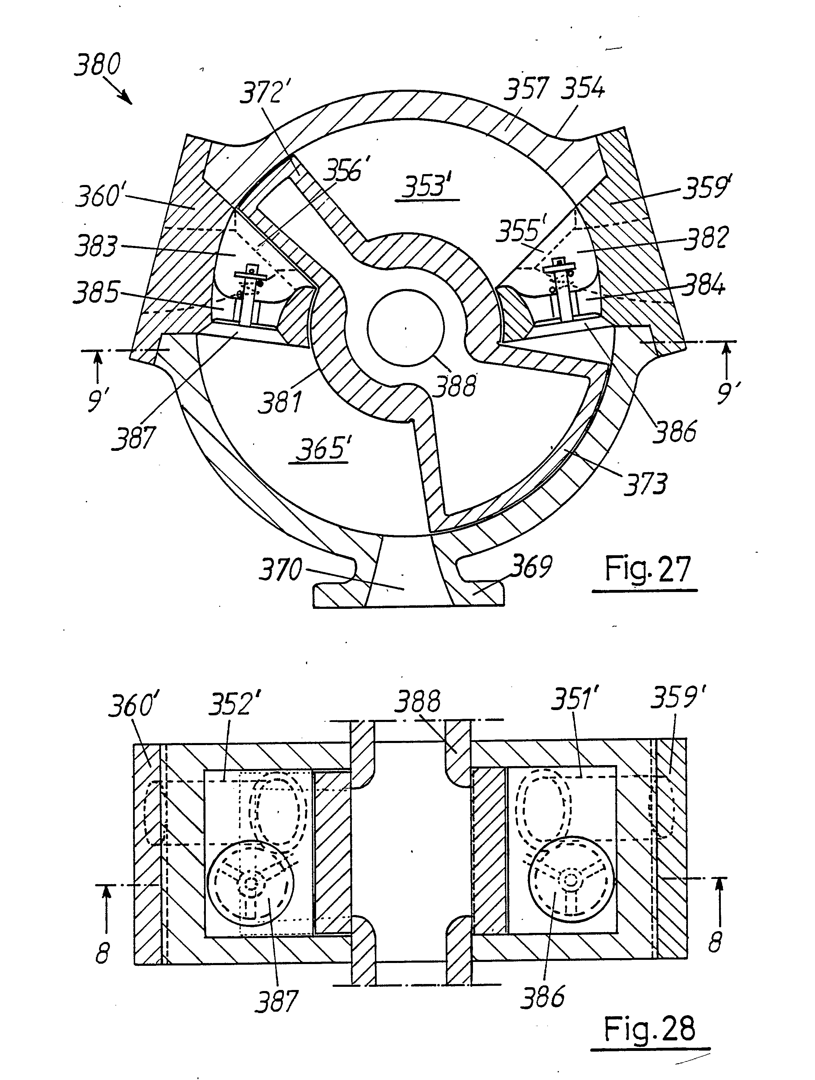

Fig. 27 zeigt einen Schnitt durch einen Verbrennungsringmotor 380 senkrecht zu der Drehachse der Kolbenwelle 381. Der Aufbau dieses Verbrennungsringmotors 380 entspricht im wesentlichen dem des in Fig. 26 beschriebenen Verbrennungsringmotors 350, jedoch mit einigen besonderen Unterschieden. Es wurden daher dieselben Bezugszeichen für entsprechende Teile gewählt, und die nachfolgende Beschreibung befaßt sich demgemäß nur mit den Abweichungen dieser Ausbildungsform.

Als wesentlicher Unterschied zu dem Verbrennungsringmotor 350 ist bei dem Verbrennungsringmotor 380 anzusehen, daß keine Einspülkanalabschnitte in den Wandabschnitten 359' bzw. 360' vorgesehen sind, die mit kolbenwellenseitigen Kanalabschnitten zu Einspülzwecken zusammenwirken. Stattdessen sind in den Wandabschnitten 359' bzw. 360' Einspülkanäle gebildet, die jeweils aus einem ersten taschenartigen Kanalabschnitt 382 bzw. 383 und einem kreisförmigen Kanalabschnitt 384 bzw. 385 bestehen, der an seiner Mündungsseite in den Arbeitsraum 365' mit einem druckgesteuerten Ventil 386 bzw. 387 verschlossen ist. Das Ventil 386 bzw. 387 ist in dem Wandabschnitt 359' bzw. 360' mit einer Führung zentrisch gehalten und in Schließrichtung mit einer Feder vorgespannt, wie in den Fig. 27 und 28 schematisch dargestellt ist.

Die Kanalabschnitte 382 und 384 bzw. 383 und 385 sind, wie aus Fig. 28 zu entnehmen ist, in den Wandabschnitten 359' bzw. 360' in axialer Richtung neben den in beiden Figuren nur gestrichelt angedeuteten Einlaßkanälen 351' bzw. 352' angeordnet, welche jeweils wie bei der Fig. 26 durch druckgesteuerte Ventil 355' bzw. 356' geschlossen sind. Sowohl die Einspülventile als auch die Einlaßventile können jeweils auch in üblicher Weise mechanisch zwangsgesteuert sein.

Der Spülkolben 372' ist bei diesem Ausführungsbeispiel wiederum hohl mit einem im wesentlichen rechteckigen Querschnitt ausgebildet, wodurch sich eine Gewichtsersparnis und eine günstigere Kühlung durch eine Öffnung 388 der Kolbenwelle 381 mittels eines gasförmigen Mediums ermöglichen läßt.

Durch diese Ausbildung des Verbrennungsringmotors 380 werden nicht nur Ansaugverluste verringert, sondern auch deutlich die Vorkompressionsverluste infolge der Einspülüberströmkanalkonfiguration herabgesetzt. Auch bei diesem Motor läßt sich die oben angesprochene Gleichstromspülung mit allen bekannten Vorteilen, insbesondere mit einer günstigen Schichtverbrennung realisieren.

Durch das Vorsehen eines Einströmeinlaßventils kann der Spülkolben 372' viel dünnwandiger und im Querschnitt schmaler als der Spülkolben 372 ausgebildet werden, so daß insgesamt ein größerer Schwenkwinkel zur Verfügung steht. Günstig ist bei der dargestellten Ausbildung ferner, daß relativ große Ventileinheiten verwendet werden können.

## Ansprüche

1. Verbrennungsringmotor, bestehend aus einem Motorgehäuse, wenigstens einem ringförmigen Arbeitsraum mit wenigstens einer Zündkerze, einer Kolbenwelle mit wenigstens einem Arbeitskolben, der in dem ringförmigen Arbeitsraum pendelnd bewegbar ist, einer Luft-oder Verbrennungsgemisch-Zuführeinrichtung, und aus einem Triebwerk, durch das die pendelnde Bewegung der Kolbenwelle in eine gleichsinnige Drehbewegung einer Abtriebswelle übertragbar ist, **dadurch gekennzeichnet,** daß das Motorgehäuse (12, 13, 112, 166, 191, 231, 281, 334, 354) im Bereich eines den Arbeitsraum (17, 118, 172, 173, 174, 196, 198, 365, 365') begrenzenden Wandabschnitts (26, 28, 26″, 28″, 168, 169, 170, 200, 201, 202, 203, 359, 359', 360, 360') geteilt ist;
daß wenigstens teilweise an einem Motorgehäuseteil (13, 14, 16, 114, 116, 166, 191, 231, 281, 334, 354) angeformtes Triebswerksgehäuse (18, 19, 233, 234) vorgesehen ist; und
daß der Luft-oder Verbrennungsgemisch-Zuführeinrichtung Spülkanalteile (66, 67, 136, 138, 140) zugeordnet sind, welche von der Kolbenwelle (40-40″ ; 130, 164, 220, 251) und/oder Abschnitten des Motorgehäuses gebildet und abhängig von der Stellung der Kolbenwelle schließbar sind.

2. Verbrennungsringmotor nach Anspruch 1, dadurch gekennzeichnet, daß das Motorgehäuse (12, 13, 112, 166, 191, 231, 281) für jeden Arbeitsraum (17, 118, 172-174, 196, 198, 365, 365') einen ringförmigen Luft-oder Verbrennungsgemisch-Einspülabschnitt (15, 120, 353, 353') aufweist, der mit einem an der Kolbenwelle (40-40″, 130, 164, 220, 251, 361) gebildeten Spülkanalteil (66-66″, 136, 376) in Verbindung steht,
und daß der jeweilige motorgehäuseseitige Spülkanalteil (67, 363) an einem stirnseitigen Ende des ringförmigen Luft-oder Verbrennungsgemisch-Einspülabschnitts mündet.

3. Verbrennungsringmotor nach Anspruch 1 oder 2,
dadurch gekennzeichnet,
daß jeder Wandabschnitt (26, 28, 26″, 28″, 168, 169, 170, 200, 201, 202, 203, 359, 359', 360, 360') zwischen Arbeitsraum (17, 118, 172, 173, 174, 196, 198, 365, 365') und Luft-oder Verbrennungsgemisch-Einspülabschnitt (15, 120, 353, 353') als separater Gehäuseteil ausgebildet ist, der im Bereich der Teilung des Motorgehäuses (12, 13, 112, 166, 191, 231, 281, 334, 354) einsetzbar und befestigbar ist.

4. Verbrennungsringmotor nach Anspruch 2 oder 3,
dadurch gekennzeichnet,
daß der ringförmige Luft-oder Verbrennungsgemisch-Einspülabschnitt (15, 320, 353, 353') in dem Motorgehäuse (12, 13, 112, 166, 191, 231, 281, 334, 354) in querschnittsgleicher Fortsetzung des ringförmigen Arbeitsraums (17, 118, 172, 173, 174, 196, 198, 365, 365') gebildet ist.

5. Verbrennungsringmotor nach einem der Ansprüche 2 bis 4,
dadurch gekennzeichnet,
daß die Kolbenwelle (40-40″, 251, 361, 381) für jeden Arbeitskolben (62, 62″, 192, 194, 255, 373) einen Spülkolben (60-60″, 193, 195, 256, 364,372,372') aufweist, der in dem ringförmigen Luft-oder Verbrennungsgemisch-Einspülabschnitt (15, 197, 199, 353, 353') angeordnet ist und sich diametral zu dem Arbeitskolben erstreckt.

6. Verbrennungsringmotor nach einem der vorangehenden Ansprüche,
dadurch gekennzeichnet,
daß das Motorgehäuse (12, 112, 281, 334, 354) in der Ebene der Kolbenwelle (40, 40', 130, 220, 251, 361, 381) geteilt ist.

7. Verbrennungsringmotor nach einem der Ansprüche 1 bis 5,
dadurch gekennzeichnet,
daß das Motorgehäuse aus einem topfartigen Gehäuseteil (13, 166, 191, 231) und einem deckelartigen Gehäuseteil (21, 232) besteht, wobei der deckelartige Gehäuseteil einen axialen Wandabschnitt des Arbeitsraums (17, 172-174, 196, 198) bildet.

8. Verbrennungsringmotor nach einem der vorangehenden Ansprüche,
dadurch gekennzeichnet,
daß jeder Kolben (60-60''' ; 256, 62-62''', 255, 364, 372, 373) und die Kolbenwelle (40, 130, 164, 251, 361, 381) einstückig ausgebildet sind.

9. Verbrennungsringmotor nach einem der Ansprüche 1 bis 7,
dadurch gekennzeichnet,
daß jede Einheit aus Kolben (221) und Kolbenwelle (220, 223, 224) aus getrennten Teilen zusammengesetzt ist.

10. Verbrennungsringmotor nach einem der vorangehenden Ansprüche,
dadurch gekennzeichnet,
daß jeder Kolben (60-60''' , 221, 256, 62-62''', 255, 364, 372-373) und die Kolbenwelle (40-40''', 130, 164, 220, 251, 361, 381) hohl ausgebildet sind.

11. Verbrennungsringmotor nach Anspruch 10,
dadurch gekennzeichnet,
daß jeder Kolben (60-60''', 221, 256, 62-62''', 255, 364, 372-373) und die Kolbenwelle (40-40''', 130, 164, 220, 251, 361, 381) mit einem gasförmigen Medium gekühlt sind, wobei das gasförmige Medium an einer Seite der hohlen Kolbenwelle mittels eines Zuführrohrs (84) in jeden Arbeitskolben (62-62''', 255, 373) über dessen Breite gerichtet zuführbar ist, wobei das Medium an derselben Seite der Kolbenwelle oder durch ein Leitelement (252) in den nächstliegenden Abschnitt jedes Arbeitskolbens (255) umlenkbar ist und an der anderen Seite de Kolbenwelle austritt, und wobei durch das Leitelement (252) ein Teil des gasförmigen Mediums in den nächstliegenden Abschnitt des Spülkolbens (256) umlenkbar ist.

12. Verbrennungsringmotor nach einem der vorgangehenden Ansprüche,
dadurch gekennzeichnet,
daß für die Kolbenwelle (40-40''', 130, 164, 220, 251, 361) eine Ölschmierung im Bereich des den ringförmigen Arbeitsraum (17, 118, 172-174, 196, 198, 365, 365') stirnseitig begrenzenden Wandabschnitts (26, 28, 26'', 28'', 168, 169, 170, 200, 201, 202, 203, 359, 359', 360, 360') mit einer Ölzufuhr hinter einem Kolbenringabschnitt (282) vorgesehen ist, wobei jeder Kolben (60-60''', 256, 62-62''' , 255, 364, 372, 373) wenigstens einen Kolbenringabschnitt (282) und eine Kolbenringdichtung (287) aufweist, welcher wenigstens eine näher zu der Kolbenwelle (40-40''' , 130, 164, 220, 251) liegende, gehäuseseitige Dichtung (288) zugeordnet ist, wobei für die Kolbenschmierung eine Ölzufuhr unterhalb jedes Kolbenringabschnitts vorgesehen ist, und wobei ein Teil des Kolbenringabschnitts die Kolbenringdichtung übergreift.

13. Verbrennungsringmotor nach einem der vorangehenden Ansprüche,
dadurch gekennzeichnet,

daß für winklige Kolbenquerschnitte in kreisförmig eingefräste Nuten eingesetzte Eckendichtungen (293) vorgesehen sind.

14. Verbrennungsringmotor nach einem der vorangehenden Ansprüche,
dadurch gekennzeichnet,
daß das Triebswerkgehäuse (18, 19, 233, 234) für die Aufnahme eines Kurbelgetriebes (68, 69, 70) vorgesehen ist und mit dem Motorgehäuse eine gemeinsame Teilung in der Ebene der Kolbenwelle aufweist.

15. Verbrennungsringmotor nach einem der vorangehenden Ansprüche,
dadurch gekennzeichnet,
daß das Motorgehäuse (12, 13, 112, 166, 191, 231, 281, 334, 354) Anschlußelemente für ein modulartige serielle Verbindung mit wenigstens einem anderen Motorgehäuse eines Verbrennungsringmotors, einer Pumpe und/oder einem Kompressor mit jeweils gleichartigem Aufbau aufweist.

16. Verbrennungsringmotor nach einem der vorangehenden Ansprüche,
dadurch gekennzeichnet,
daß im Bereich eines Einlaßkanals (76) für Luft- oder Verbrennungsgemisch in den Einspülabschnitt (15) ein Ausgleichskanal (331) ausgebildet ist, der beiderseits des Einlaßkanals (76) mit dem Einspülraum (15) kommuniziert, wobei der Ausgleichskanal (331) jeweils etwa im Bereich des ersten Drittels der Hälfte des ringförmigen Einspülabschnitts (15) mündende Öffnungen (332, 333) aufweist, wobei sich die Öffnungen (332, 333) radial wenigstens über die Hälfte des Einspülabschnitts (15) erstrecken, daß der Luft-oder Verbrennungsgemisch-Einlaßkanal (76) mit wenigstens einem axialen bzw. seitlichen Einlaßkanalabschnitt (311) verbunden ist, und daß ein Auslaßkanal (80) für das Verbrennungsprodukt mit wenigstens einem axialen bzw. seitlichen Auslaßkanalabschnitt (315) verbunden ist.

17. Verbrennungsringmotor nach einem der Ansprüche 1 bis 15,
dadurch gekennzeichnet,
daß der ringförmige Einspülabschnitt (353) an seinen Stirnseiten jeweils wenigstens einen Luft-oder Verbrennungsgemisch-Einlaßkanal (351, 352) aufweist, der durch ein druckgesteuertes Ventil (355, 356) schließbar ist.

18. Verbrennungsringmotor nach einem der vorangehenden Ansprüche,
dadurch gekennzeichnet,
daß wenigstens zwei Enspülkanäle (382, 383) zwischen dem Einspülabschnitt (353') und dem Arbeitsraum (365') vorgesehen sind, die entsprechend druckgesteuerte Ventile (386, 387) aufweisen.

19. Verbrennungsringmotor nach einem der vorangehenden Ansprüche,
dadurch gekennzeichnet,
daß im Bereich des Spülkolbens (364) in der Kolbenwelle (40) Speicherpolster in Form von Ausnehmungen (336) vorgesehen sind.

20. Verbrennungsringmotor nach einem der vorangehenden Ansprüche,
dadurch gekennzeichnet
daß als Triebwerk eine Kurbelschwinge (68) mit einem Pleuel (69) und einer Abtriebskurbel (71) vorgesehen ist, wobei der Abstand (1) zwischen der Drehachse der Kolbenwelle (40) und der Drehachse der Abtriebskurbelwelle (90) das 1,1-1,7fache des Radius ($r_s$) der Kurbelschwinge (68) beträgt.

Fig.1

Fig. 2

Fig. 3

26"

10"

78"

13
19

12"

39

60

66"

40"

62" 46"

21 23

30"  28" 32"

70" 68"

Fig. 4

0 247 223

Fig. 5

Fig. 6

Fig. 7

Fig.8

Fig. 9

Fig. 10

Fig. 11

Fig. 12

Fig. 13

Fig. 14

Fig.15

Fig.16

Fig. 17

283
282
281
284
285
286
288
287
289
280

Fig 18

26
281
32
290
292
291
40

Fig. 17A

Fig. 17B

Fig. 17C

281
282
285
289
287'
288
286

285'
282'
287'

282'
287'

293
293
281
280

Fig. 19A

293
19A
280
281
282
19A

Fig. 19

0 247 223

Fig. 20

294    295

294    297    295    Fig. 21

300

22 → 312

302

317 309

306

316

315

305

308

307

22 → 313

**Fig. 23**

312

23

310

302

301

315 314 305

313

23

311

**Fig. 22**

0 247 223

Fig. 25

0 247 223

Fig. 24

Fig. 26

Fig.27

Fig.28

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-1 903 836 (STAAT) <br> * Figur 2; Seite 3, Absatz 3 * | 1 | F 01 C 9/00 <br> F 01 C 21/10 <br> F 02 B 55/08 |
| A | | 2,6,15 | |
| Y | FR-A- 799 436 (BABEL) <br> * Figur 1; Seite 1, Zeilen 6-10 * | 1 | |
| A | | 9-11 | |
| A | DE-A-2 351 781 (BALVE) <br><br> * Seite 5, Zeilen 2-15 * | 1,2,4, 5,8 | |
| A | FR-A-1 078 541 (PIGE) <br> * Figur 2; Seite 2, Zeilen 1-18 * | 1,14 | RECHERCHIERTE SACHGEBIETE (Int. Cl.4) |
| A | DE-C- 954 860 (SCHREWE) <br> * Insgesamt * | 1,17 | F 01 C <br> F 02 B |

--- 

Der vorliegende Recherchenbericht wurde für alle Patentansprüche erstellt.

| Recherchenort | Abschlußdatum der Recherche | Prüfer |
|---|---|---|
| DEN HAAG | 09-12-1986 | WASSENAAR G. |